# EUROPEAN PATENT APPLICATION

(11) **EP 4 823 150 A1**
(43) Date of publication of application: **14.10.2026**
(21) Application number: 24910155.1
(22) Date of filing: 15.10.2024
(51) Int. Cl.: H04W 24/02

(54) **COMMUNICATION METHOD AND COMMUNICATION APPARATUS**

(30) Priority: 28.12.2023 CN 202311840335
(71) Applicant: Huawei Technologies Co., Ltd., Shenzhen, Guangdong 518129 (CN)
(72) Inventor: HU, Xiang, Shenzhen, Guangdong 518129 (CN)
(74) Representative: Isarpatent
(86) International application number: PCT/CN2024/124841
(87) International publication number: WO 2025/139213

(57) **Abstract**

This application provides a communication method and apparatus. A network digital twin function network element generates status information of a twin network by obtaining status information of one or more physical objects in a physical network. Therefore, the status information of the twin network can reflect current status information of the entire network in one or more dimensions. A status and service experience of the entire physical network can be monitored based on the status information of the twin network. When relatively poor service experience is subsequently detected, other network elements can be notified in a timely manner, so that the other network elements can be assisted in determining a target assurance policy based on a current actual status of the physical network, thereby better ensuring service experience.

## Description

This application claims priority to Chinese Patent Application No. 202311840335.X, filed with the China National Intellectual Property Administration on December 28, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

Currently, within Technical Specification (Technical Specification, TS) 23.288 of the 3rd Generation Partnership Project (3rd Generation Partnership Project, 3GPP) standard, a network data analytics function (network data analytics function, NWDAF) network element supports data subscription and collection, data analytics, and analytics result subscription and notification mechanisms, thereby enabling a solution for perception and assurance of experience of key services. However, in the existing solution, the NWDAF considers service experience of only some services and some users, and provides assurance for those services and users. However, such a solution lacks awareness of an overall physical network state, or in other words, lacks overall coordination across all users and all services in the entire network. For example, the following cases may occur: (1) When service experience of some users is poor, a dedicated bearer may be established for a specific user to guarantee bandwidth, but this may degrade service experience of common users. (2) In the existing solution, assurance policies are preset in advance. If it is found that experience of a service is poor, a current network status may be indeed poor, and a preconfigured guaranteed bandwidth cannot be supported. In this case, the effect of service experience assurance is not significant.

### SUMMARY

This application provides a communication method, so that an assurance policy can be determined based on a current actual status of a network, to better ensure service experience of a user.

According to a first aspect, a communication method is provided. The method may be performed by a first network element, or may be performed by a component (for example, a chip or a circuit) of a first network element. This is not limited. For example, the first network element may be referred to as a "network digital twin function network element".

The method includes: The first network element sends a first subscription message to a target network element, where the first subscription message is used to request to obtain target information, and the target information represents a status of a physical network; the first network element receives a first notification message from the target network element, where the first notification message carries the target information, the target information includes status information of a physical object in the physical network, and the physical object includes at least one of the following: a network element, a network topology, a user, and an application; and the first network element generates status information of a twin network based on the target information, where the status information of the twin network includes status information of a twin object, the twin object is in a one-to-one mapping with the physical object, and the status information of the twin network is used to monitor the status and service experience of the physical network.

In this application, the target information includes information of a physical object in the physical network, and the physical object includes at least one of the following: a network element, a network topology, a user, and an application. For example, the physical object may include a network element, a network topology, a user, and an application.

In this application, in a possible implementation, the "target network element" may be, for example, an NWDAF network element. In another possible implementation, the "target network element" may be a core network element such as an AMF, a UPF, or an OAM. It may also be understood that, in this application, the first network element may directly send a subscription message to each core network element, to subscribe to target information on each network element. Alternatively, the first network element may send a subscription request message to the NWDAF, to subscribe to target information on each network element from the NWDAF, and then the NWDAF sends the subscription request message to each specific core network element. In other words, the NWDAF uniformly collects the target information subscribed to on each core network element.

For example, the first subscription request message may carry an identifier of a network element, a request for a network topology, an identifier of a user, and an identifier of an application.

For example, "status information of the network element" includes at least one of the following: a type of the network element, resource specifications of the network element, a quantity of users carried on the network element, distribution of the users carried on the network element, a congestion status of the users carried on the network element, and distribution of network traffic carried on the network element.

For example, the network element may include a UPF, an SMF, a PCF, a UDM, a RAN, or a cell (cell).

The "resource specification of the network element" may include, for example, a hardware specification and/or a service specification. For example, the hardware specification may include at least one of the following: a specification of a central processing unit (central processing unit, CPU), a memory specification, and a storage specification. For example, the service specification may include a throughput supported by the network element and/or a quantity of users supported by the network element. "Distribution of the users carried on the network element" may include, for example, a user tier and/or a package used by the user. For example, "distribution of network traffic carried on the network element" may include services of different types, such as video, live broadcast, telephone, and web page services. For another example, "distribution of network traffic carried on the network element" may include services of users at different tiers, such as GoTone, live broadcast, and game services.

For example, "status information of the network topology" includes at least one of the following: a path between network elements, an interface between network elements, a specification of an interface between network elements, traffic carried on an interface between network elements, and distribution of traffic carried on an interface between network elements, and optionally, further includes status information of network elements.

For example, "information of the user" includes at least one of the following: an attribute of the user, subscription information of the user, and a quality of service (quality of service, QoS) parameter corresponding to the user. The "attribute of the user" includes an inherent attribute of the user and a dynamically changing attribute. For example, the "inherent attribute of the user" may include a gender, an age, and the like of the user, and the "dynamically changing attribute of the user" may include, for example, a package subscribed to by the user. The "subscription information of the user" may include, for example, information of the package subscribed to by the user. The "QoS parameter" may include, for example, a bandwidth.

For example, "information of the application" includes at least one of the following: a type of the application, a start time of a service corresponding to the application, duration of the service corresponding to the application, a throughput of traffic used by the service corresponding to the application, a rate of traffic used by the service corresponding to the application, service experience of the application, and a quality of service QoS parameter for carrying the application.

Based on the foregoing technical solution, in this application, the network digital twin function network element generates the status information of the twin network by obtaining status information of one or more physical objects in the physical network. Therefore, the status information of the twin network can reflect current status information of the entire network in one or more dimensions, and the status and service experience of the entire physical network can be monitored based on the status information of the twin network. In this application, the twin network may be synchronized with the physical network in real time, thereby improving efficiency of perceiving an actual status of the physical network. In addition, when relatively poor service experience is detected, other network elements (for example, an artificial intelligence assistant) are notified in a timely manner, so that the other network elements can be assisted in determining a target assurance policy based on the current actual status of the physical network to facilitate subsequent simulation (for example, by a network simulation network element), thereby better ensuring service experience.

With reference to the first aspect, in a possible implementation, the method further includes: The first network element receives a second subscription message from a second network element, where the second subscription message is used to subscribe to monitoring of a target event from the first network element, and the second subscription message carries an identifier of the target event and an identifier of a target twin object corresponding to the target event; and the first network element determines, from the status information of the twin network and based on the second subscription message, status information of the target twin object corresponding to the target event, and monitors the target twin object.

In this application, for example, the second network element may be referred to as an "artificial intelligence assistant".

For example, the identifier of the target twin object includes at least one of the following: an identifier of a target user, an identifier of a target service, and an identifier of a target cell.

For example, the target event in this application may include at least one of the following: service experience of the target service of the target user, a congestion status of the target cell in which the target user is located, the congestion status of the target cell, and service experience of a service in the target cell.

With reference to the first aspect, in a possible implementation, the method further includes: The first network element sends a second notification message to the second network element when the first network element determines that service experience of an application corresponding to the target twin object is poor, where the second notification message indicates that service experience of an application corresponding to the target event is relatively poor.

For example, the second notification message carries at least one of the following: the identifier of the target user, the identifier of the target service, the identifier of the target cell, experience information of the target user accessing the target service, and an indicator of the target user accessing the target service. For example, the indicator of the target user accessing the target service may include a delay, a bandwidth, a rate, and the like corresponding to the service.

With reference to the first aspect, in a possible implementation, the method further includes: The first network element receives a first request message from a third network element, where the first request message is used to request to obtain the status information of the target twin object corresponding to the target event; and the first network element sends a first response message to the third network element, where the first response message carries the status information of the target twin object.

In this application, for example, the third network element may be referred to as a "network simulation function network element".

For example, the first request message carries the identifier of the target cell; and the status information of the target twin object includes at least one of the following: utilization of physical resource blocks PRBs in the target cell, a quantity of target users included in the target cell, a quantity of packets or bytes transmitted in the target cell, a guaranteed bandwidth of a dedicated bearer allocated to the target cell, and a guaranteed bandwidth of a quality of service flow identifier QFI of the target cell.

With reference to the first aspect, in a possible implementation, the method further includes: The first network element obtains updated target information of the target network element, where the updated target information is generated after a target assurance policy is executed in the physical network; the first network element updates the status information of the twin network based on the updated target information; and the first network element sends first indication information to the second network element when the first network element determines that the status information of the target twin object corresponding to the target event changes, where the first indication information indicates that the status information of the target twin object changes.

According to a second aspect, a communication method is provided. The method may be performed by a third network element, or may be performed by a component (for example, a chip or a circuit) of a third network element. This is not limited. For example, the third network element may be referred to as a network simulation function network element.

With reference to the second aspect, in a possible implementation, the method includes: The third network element receives a second request message from a second network element, where the second request message carries an identifier of a target event and a target assurance policy, and the second request message is used to request to simulate an effect generated after the target assurance policy is executed in a physical network; the third network element obtains, from a first network element and based on the second request message, status information of a target twin object corresponding to the target event, where the twin object is in a one-to-one mapping with a physical object, the physical object includes at least one of the following: a network element, a network topology, a user, and a service, and status information of each twin object is used to monitor a status and service experience of the physical network; the third network element performs simulation based on the status information of the target twin object, the target assurance policy, and a simulation model, and generates a simulation result; and the third network element sends a second response message to the second network element, where the second response message carries the simulation result.

Specifically, for status information of each physical object, refer to the description of the first aspect. Details are not described again.

In this application, information of the target assurance policy may include at least one of the following: updating or adding a dedicated bearer with a guaranteed bit rate GBR, updating or adding a quality of service flow identifier QFI, deleting or updating a dedicated bearer established in a target cell, deleting or updating a quality of service flow identifier QFI established in the target cell, limiting bandwidths of some non-real-time services in the target cell, and limiting bandwidths of services based on different user tiers in the target cell.

For example, the simulation result includes service experience information of a target user after the target assurance policy is executed, and status information of the target cell after the target assurance policy is executed. Optionally, the simulation result further includes service experience information of other users in the target cell than the target user after the target assurance policy is executed.

Based on the foregoing technical solution, the network simulation function network element may perform simulation based on a request message of an artificial intelligence assistant. The network simulation function network element may obtain status information of a required target twin object from a network digital twin function network element before the simulation, and send a simulation result to the artificial intelligence assistant. The artificial intelligence assistant finally determines an assurance policy. Through the simulation performed by the network simulation function network element, it may be predicted in advance whether a target assurance policy is suitable for a current network status and whether service experience of a user can be improved.

With reference to the second aspect, in a possible implementation, that the third network element obtains, from the first network element and based on the second request message, the status information of the target twin object corresponding to the target event includes: The third network element sends a first request message to the first network element based on the second request message, where the first request message is used to request to obtain the status information of the target twin object; and the third network element receives a first response message from the first network element, where the first response message carries the status information of the target twin object.

The first request message carries an identifier of the target cell; and the status information of the target twin object includes at least one of the following: utilization of physical resource blocks PRBs in the target cell, a quantity of target users included in the target cell, a quantity of packets and a quantity of bytes transmitted in the target cell, a guaranteed bandwidth of a dedicated bearer allocated to the target cell, and a guaranteed bandwidth of a quality of service flow identifier QFI of the target cell.

According to a third aspect, a communication method is provided. The method may be performed by a second network element, or may be performed by a component (for example, a chip or a circuit) of a second network element. This is not limited. For example, the second network element may be referred to as an artificial intelligence assistant.

The method includes: The second network element obtains first information, where the first information indicates a type of a task delivered by a user, and the type of the task includes at least one of the following: a task of monitoring a target event, a task of determining a target assurance policy, a task of requesting simulation, and a task of evaluating an effect of service experience after the target assurance policy is executed in a physical network; and the second network element determines the type of the task based on the first information.

Based on the foregoing technical solution, a function of the artificial intelligence assistant is extended in this application. For example, the artificial intelligence assistant may support understanding and decomposition of user intents by using an intent framework, and implement dynamic delivery and perception and present service experience of a target user by using a network digital twin function network element and a network simulation function network element. The artificial intelligence assistant may work with the network simulation function network element to implement intelligent decision-making on a service experience optimization policy and execution of the optimization policy. Based on policy execution, the artificial intelligence assistant completes effect evaluation and reinforcement learning, thereby forming a complete closed-loop solution.

With reference to the third aspect, in a possible scenario, the method further includes: The second network element sends a second subscription message to a first network element, where the second subscription message is used to subscribe to monitoring of the target event from the first network element, the second subscription message carries an identifier of the target event and an identifier of a target twin object corresponding to the target event, the twin object is in a one-to-one mapping with a physical object, the physical object includes at least one of the following: a network element, a network topology, a user, and a service, and status information of each twin object is used to monitor a status and service experience of the physical network; and the second network element receives a second notification message from the first network element, where the second notification message indicates that service experience of an application corresponding to the target event is relatively poor.

With reference to the third aspect, in another possible scenario, the method further includes: The second network element sends a second subscription message to the first network element, where the second subscription message is used to request to monitor the target event; the second network element receives a second notification message from the first network element, where the second notification message indicates that service experience of the application corresponding to the target event is relatively poor; and the second network element determines, based on the second notification message, a target assurance policy corresponding to the target event.

With reference to the third aspect, in still another possible scenario, the method further includes: The second network element sends a second request message to a third network element, where the second request message carries the identifier of the target event and the target assurance policy, and the second request message is used to request to simulate an effect generated after the target assurance policy is executed in the physical network; the second network element receives a second response message from the third network element, where the second response message carries a simulation result; and the second network element determines, based on the simulation result, a target assurance policy corresponding to the target event.

With reference to the third aspect, in a possible scenario, the method further includes: The second network element receives first indication information from the first network element, where the first indication information indicates that status information of the target twin object corresponding to the target event changes; and the second network element evaluates, based on the first indication information, the effect of service experience after the target assurance policy is executed in the physical network.

For explanations of technical terms that are in the third aspect and that are the same as those in the first aspect and the second aspect, refer to the descriptions in the first aspect and the second aspect. Details are not described again.

According to a fourth aspect, a communication method is provided. The method may be performed by a network data analytics function network element, or may be performed by a component (for example, a chip or a circuit) of a network data analytics function network element. This is not limited.

The method includes: The network data analytics function network element receives a first subscription message from a first network element, where the first subscription message is used to request to obtain target information, and the target information represents a status of a physical object in a physical network; the network data analytics function network element obtains the target information based on the first subscription request message; the network data analytics function network element generates status information of the physical object based on the first subscription message and the target information, where the target information includes the status information of the physical object, and the physical object includes at least one of the following: a network element, a network topology, a user, and a service; and the network data analytics function network element sends a first notification message to the first network element, where the first notification message carries the status information of the physical object, the physical object is in a one-to-one mapping with a twin object, the status information of the physical object is used to generate status information of the twin object, and the status information of the twin object is used to monitor a status and service experience of the physical network.

Similarly, for explanations of technical terms that are in the fourth aspect and that are the same as those in the first aspect and the second aspect, refer to the descriptions in the first aspect and the second aspect. Details are not described again.

Based on the foregoing technical solutions, in this application, the network digital twin function network element may subscribe to target information of each core network element from the network data analytics function network element. The network data analytics function network element collects the target information of each core network element, preprocesses the target information to generate the status information of the physical object, and subsequently may directly send the status information of the physical object to the network digital twin function network element, so that the network digital twin function network element may generate the status information of the twin object based on the status information of the physical object, and further generate the status information of the twin network. In this application, the twin network may be synchronized with the physical network in real time, thereby improving efficiency of perceiving an actual status of the physical network. In addition, the status information of the twin object is generated by mirroring the status information of the physical object, so that other network elements can be assisted in determining a target assurance policy more properly, thereby ensuring service experience of a user.

According to a fifth aspect, a communication apparatus is provided. The apparatus is configured to perform the method in any one of the possible implementations of the first aspect to the fourth aspect. Specifically, the apparatus may include units and/or modules, for example, a transceiver unit and/or a processing unit, configured to perform the method in any one of the possible implementations of the first aspect to the fourth aspect.

In an implementation, the apparatus is a communication device (for example, a network digital twin function network element, a network simulation function network element, an artificial intelligence assistant, or a network data analytics function network element). When the apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a network digital twin function network element, a network simulation function network element, an artificial intelligence assistant, or a network data analytics function network element). When the apparatus is the chip, the chip system, or the circuit used in the communication device, the communication unit may be an input/output interface, an interface circuit, an output circuit, an input circuit, a pin, a related circuit, or the like of the chip, the chip system, or the circuit, and the processing unit may be at least one processor, a processing circuit, a logic circuit, or the like.

According to a sixth aspect, a communication apparatus is provided. The apparatus includes at least one processor, configured to execute a computer program or instructions stored in a memory, to perform the method in any one of the possible implementations of the first aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a network digital twin function network element.

In another implementation, the apparatus is a chip, a chip system, or a circuit used in an access and mobility management function network element.

According to a seventh aspect, a communication apparatus is provided. The apparatus includes at least one processor, configured to execute a computer program or instructions stored in a memory, to perform the method in any one of the possible implementations of the second aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a network simulation function network element.

In another implementation, the apparatus is a chip, a chip system, or a circuit used in a network simulation function network element.

According to an eighth aspect, a communication apparatus is provided. The apparatus includes at least one processor, configured to execute a computer program or instructions stored in a memory, to perform the method in any one of the possible implementations of the third aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is an artificial intelligence assistant.

In another implementation, the apparatus is a chip, a chip system, or a circuit used in an artificial intelligence assistant.

According to a ninth aspect, a communication apparatus is provided. The apparatus includes at least one processor, configured to execute a computer program or instructions stored in a memory, to perform the method in any one of the possible implementations of the fourth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a network data analytics function network element.

In another implementation, the apparatus is a chip, a chip system, or a circuit used in a network data analytics function network element.

According to a tenth aspect, this application provides a processor, including an input circuit, an output circuit, and a processing circuit. The processing circuit is configured to: receive a signal through the input circuit, and transmit a signal through the output circuit, to enable the processor to perform the method in any one of the possible implementations of any one of the first aspect to the fourth aspect.

In a specific implementation process, the processor may be one or more chips, the input circuit may be an input pin, the output circuit may be an output pin, and the processing circuit may be a transistor, a gate circuit, a trigger, any type of logic circuit, or the like. An input signal received by the input circuit may be received and input by, for example, but not limited to, a transceiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eleventh aspect, a processing device is provided and includes a processor and a memory. The processor is configured to read instructions stored in the memory, and can receive a signal through a transceiver, and transmit a signal through a transmitter, to perform the method in any one of the possible implementations of any one of the first aspect to the fourth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read only memory, ROM). The memory and the processor may be integrated on a same chip, or may be separately disposed on different chips. A type of the memory and a manner of disposing the memory and the processor are not limited in embodiments of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the transceiver. The transmitter and the transceiver may be collectively referred to as a transceiver.

The processing device in the eleventh aspect may be one or more chips. The processor in the processing device may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

According to a twelfth aspect, a computer-readable storage medium is provided. The computer-readable medium stores program code executed by a device, and the program code is for performing the method in any one of the possible implementations of the first aspect to the fourth aspect.

According to a thirteenth aspect, a computer program product including instructions is provided. When the computer program product is run on a computer, the computer is enabled to perform the method in any one of the possible implementations of the first aspect to the fourth aspect.

According to a fourteenth aspect, a communication system is provided. The communication system includes a network digital twin function network element, a network simulation function network element, an artificial intelligence assistant, and a network data analytics function network element, where the network digital twin function network element is configured to perform the method in any one of the possible implementations of the first aspect, the network simulation function network element is configured to perform the method in any one of the possible implementations of the second aspect, the artificial intelligence assistant module is configured to perform the method in any one of the possible implementations of the third aspect, and the network data analytics function network element is configured to perform the method in any one of the possible implementations of the fourth aspect.

### BRIEF DESCRIPTION OF DRAWINGS

FIG. 1 is a system architecture to which this application is applicable;
FIG. 2 is a schematic flowchart of a communication method 200 according to this application;
FIG. 3 is a schematic flowchart of a communication method 300 according to this application;
FIG. 4 is a schematic flowchart of a communication method 400 according to this application;
FIG. 5 is a diagram of a relationship between a network digital twin function network element, a network simulation function network element, and an artificial intelligence assistant according to this application;
FIG. 6A to FIG. 6D are a schematic flowchart of a communication method 600 according to this application;
FIG. 7 is a block diagram of a communication apparatus 100 according to this application; and
FIG. 8 is a block diagram of a communication apparatus 200 according to this application.

### DESCRIPTION OF EMBODIMENTS

The following describes technical solutions of this application with reference to accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may also be applied to a future communication system, for example, a sixth generation mobile communication system. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an Internet of Things (Internet of Things, IoT) communication system, or another communication system.

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

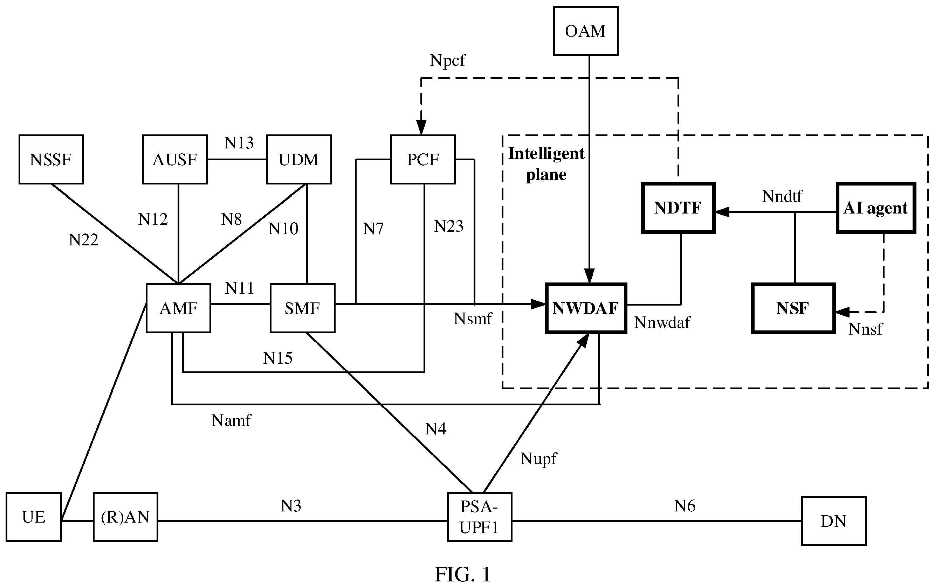

FIG. 1 is a diagram of a system architecture used in this application. FIG. 1 includes a plurality of network elements in a core network. The following first briefly describes the network elements in FIG. 1.
1. User equipment (user equipment, UE) may also be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device having a wireless connection function. Currently, examples of some terminals are as follows: a mobile phone (mobile phone), a tablet computer, a notebook computer, a palmtop computer, a mobile Internet device (mobile Internet device, MID), a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device that has a wireless communication function, a computing device, another processing device connected to a wireless modem, a terminal device in a 5G network, a terminal device in a future evolved public land mobile network (public land mobile network, PLMN), and the like. This is not limited in embodiments of this application.

As an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that are dedicated to only one type of application function and need to work with other devices such as smartphones, such as various smart bands or smart jewelry for monitoring physical signs.

In addition, in embodiments of this application, the terminal device may alternatively be a terminal device in an IoT system. An IoT is an important part of future information technology development. A main technical feature of the IoT is to connect articles to a network by using a communication technology, to implement an intelligent network for human-machine interconnection and thing-thing interconnection.

It should be noted that the terminal device and an access network device may communicate with each other by using an air interface technology (for example, an NR technology or an LTE technology). Terminal devices may also communicate with each other by using an air interface technology (for example, an NR technology or an LTE technology).

In embodiments of this application, an apparatus configured to implement a function of the terminal device may be the terminal device, or may be an apparatus that can support the terminal device in implementing the function, for example, a chip system or a chip. The apparatus may be mounted in the terminal device. In embodiments of this application, the chip system may include a chip or may include a chip and another discrete component.

2. A (radio) access network (radio access network, (R)AN) is configured to provide a network access function for an authorized user in a specific area, and can use transmission tunnels with different quality based on user tiers, service requirements, and the like. A (R)AN network element can manage radio resources and provide an access service for the terminal device, to complete forwarding of control signals and user data between the terminal device and the core network. The (R)AN may also be understood as a base station in a conventional network.

3. An access and mobility management function (access and mobility management function, AMF) network element is mainly used for mobility management, access management, and the like. Specifically, the AMF may be configured to implement a function other than session management in functions of a mobility management entity (mobility management entity, MME), for example, a function such as lawful interception or access authorization (or authentication).

For example, the RAN device may use different radio access technologies. Currently, there are two types of radio access technologies: a 3GPP access technology (for example, a radio access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), worldwide interoperability for microwave access (worldwide interoperability for microwave access, WiMAX), code division multiple access (code division multiple access, CDMA), or the like. The AN device may allow interconnection and interworking between the terminal device and a 3GPP core network by using the non-3GPP technology.

The RAN device can be responsible for functions such as radio resource management, quality of service (quality of service, QoS) management, and data compression and encryption on an air interface side. The AN device provides an access service for the terminal device, to complete forwarding of control signals and user data between the terminal device and the core network.

For example, the RAN device may include but is not limited to: a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a wireless relay node, a wireless backhaul node, a transmission point (transmission point, TP), or a transmission reception point (transmission reception point, TRP); or may be a gNB or a transmission point (a TRP or a TP) in the 5G (for example, NR) system, or one antenna panel or a group of antenna panels (including a plurality of antenna panels) of a base station in the 5G system; or may be a network node that forms a gNB or a transmission point, for example, a distributed unit (distributed unit, DU) or a base station in a next-generation 6G communication system. A specific technology and a specific device form used by the RAN device are not limited in embodiments of this application.

4. A session management function (Session Management Function, SMF) network element is mainly used for session management, allocation and management of an Internet protocol (Internet Protocol, IP) address of the terminal device, selection and management of a user plane function, termination of a policy control or charging function interface, notification of downlink data, and the like.

5. A user plane function (user plane function, UPF) network element is used for packet routing and forwarding, quality of service (quality of service, QoS) handling of user plane data, and the like. The UPF is specifically classified into an intermediate-UPF (intermediate-UPF, I-UPF) and an anchor-UPF (anchor-UPF, A-UPF). The I-UPF is connected to an access network RAN, the A-UPF is a session anchor UPF, and the A-UPF may also be referred to as a PDU session anchor (PDU session anchor, PSA).

6. A data network (data network, DN) is a network configured to provide data transmission, for example, the Internet. In the architecture in this embodiment of this application, the PSA accesses a remote DN, and an L-PSA may access a local DN.

7. An authentication server function (authentication server function, AUSF) is mainly used for user authentication, and the like.

8. A policy control function (policy control function, PCF) network element is a unified policy framework used for guiding network behavior, and provides policy rule information and the like for a control plane function network element (for example, an AMF or SMF network element).

9. A unified data management (unified data management, UDM) is used for user identifier processing, access authentication, registration, mobility management, or the like.

10. Operation, administration, and maintenance (operation, administration and maintenance, OAM) means that network management tasks are generally classified into three types based on actual network operation requirements of an operator: operation (Operation), administration (Administration), and maintenance (Maintenance). The operation mainly completes routine analytics, prediction, planning, and configuration on the network and services. The maintenance mainly refers to routine operation activities such as testing of the network and services and fault management. Generally, one or more of the following functions are supported: OAM discovery, link monitoring, remote fault indication, remote loopback test, and scalability.

11. A network slice selection function (network slice selection function, NSSF) network element is used for network slice selection.

12. Network data analytics function (network data analytics function, NWDAF) network element: The NWDAF has at least one of the following functions: a data collection function and a data analytics function. The data collection function is configured to collect related data from a network element, a third-party service server, a terminal device, or a network management system. The data analytics function is configured to perform analytics and training based on related input data to obtain a model, perform inference based on the model to determine a data analytics result, and then provide the data analytics result to the network element, the third-party service server, the terminal device, or the network management system. The analytics result may assist the network in selecting a quality of service parameter for a service, or assist the network in performing traffic routing, or assist the network in selecting a background traffic transmission policy, or the like.

It should be noted that for detailed descriptions of the NWDAF, refer to descriptions in Technical Specification (Technical Specification, TS) 23.501. Details are not described in this application.

In embodiments of this application, the NWDAF may be an independent network element, or may be co-located with another core network element. For example, the NWDAF network element may be co-located with the access and mobility management function (access and mobility management function, AMF) network element, or may be co-located with the session management function (session management function, SMF) network element.

A network digital twin function (network data twins function, NDTF) network element, an artificial intelligence assistant (artificial intelligence agent, AI agent), and a network simulation function (network simulation function, NSF) network element are introduced in the technical solutions of this application. For ease of understanding of the solutions provided in this application, the following first describes the three network elements.

### 13. NDTF network element

Before describing functions of the NDTF, the following briefly describes a digital twin (data twins, DT).

The digital twin refers to a virtual entity and subsystem, constructed in virtual (information) space based on data of a physical device, for representing the physical device, and this connection is not unidirectional or static, but persists throughout a product lifecycle. The digital twin is a virtual model designed to accurately reflect a physical object. A subject under study (for example, a wind turbine) is equipped with various sensors related to important functional fields. These sensors generate data related to different aspects of performance of the physical object (for example, energy output, temperature, and weather conditions), and then forward the data to a processing system and apply the data to a digital replica.

The NDTF may have the following functions: receiving a task delivered by the AI agent, converting the task into a processing task chain for a network digital twin through a network digital twin function operation language and parsing NDTQL model, and optimizing task orchestration and scheduling. In addition, the NDTF may also perform digital twin modeling. For example, a core network (5th generation core network, 5GC) of a fifth generation mobile communication system, a 5GC network, and network elements may be quickly instantiated by using data; changes in a physical network, NEs, and services are mapped to a digital twin in real time; and a status of the entire network is visually displayed based on object twins and relational network modeling. For example, the NDTF mentioned in this application has at least the following four functions: (1) performing digital twin modeling based on data collected from each network element (for example, the UPF, the AMF, or the OAM), and generating status information of a twin network; (2) focusing on monitoring an event based on a subscription message of the AI agent and the constructed twin network; (3) sending a notification message to the AI agent when service experience in the monitored event is relatively poor; and (4) sending status information of some twin objects to the network simulation function network element based on a request message of the network simulation function network element.

### 14. AI agent

The "AI agent" in this application is an intelligent entity that can sense an environment, make a decision, and perform an action. The AI agent usually understands user intents based on a large language model (large language model, LLM) or a multi-modal large model. For example, the AI agent can implement intelligent perception of graphics, texts, and voice inputs, autonomously make decisions, orchestrate and issue an operation task chain of a network digital twin system, and support intelligent presentation of a user interface. For example, the AI agent mentioned in this application has at least the following four functions: (1) sending a subscription message to the NDTF, to request to monitor a target event; (2) determining a target assurance policy; (3) sending a request message to the network simulation function network element to request simulation; and (4) evaluating an effect after the target assurance policy is executed in the physical network.

### 15. Network simulation function network element

The "network simulation function network element" in this application may also be referred to as a "network simulation framework" or an "intelligent simulation module". Generally, the intelligent simulation module has the following functions: (1) Low-cost trial and error: Real-time simulation may be performed based on status information of a twin object obtained from the NDTF, and then the assurance policy is sent to the physical network after verification. It may also be understood that the intelligent simulation module may simulate, based on triggering by the AI agent and the assurance policy provided by the AI agent, an effect generated after the assurance policy is executed in the physical network. Before the simulation is performed, a request also needs to be sent to the NDTF to obtain the status information of the twin object required for the simulation. During the simulation, an input of a simulation model is the status information of the twin object and the target assurance policy, and an output of the simulation is a simulation result (for example, service experience information of the user after the assurance policy is executed and status information of a target cell after the target assurance policy is executed). (2) Intelligent decision-making: The network digital twin is used to monitor the network status and generate an optimal decision based on an AI/ML capability. (3) Predictive adjustment: A future trend is predicted based on the NDTF and a historical trajectory and an adjusted assurance policy is generated. (4) Network autonomous evolution: The network has self-learning, self-verification, and self-evolution capabilities.

In this embodiment of this application, for example, the NDTF, the AI agent, and the intelligent simulation module may be respectively deployed in forms of separate network elements, or may be co-located with each other, or may be co-located with other core network elements. For example, some related functions may be deployed in the NWDAF network element, or the network twin may be directly deployed on a twin physical network element object of the network twin (for example, a UPF twin is deployed on the UPF network element, and a PCF twin is deployed on the PCF network element). A deployment form of the network twin is relatively flexible.

In the system architecture, an N1 interface is a reference point between the terminal device and the AMF; an N2 interface is a reference point between the (R)AN and the AMF, and is configured to send a non-access stratum (non-access stratum, NAS) message or the like; an N3 interface is a reference point between the (R)AN and the I-UPF, and is configured to transmit user plane data or the like; an N4 interface is a reference point between the SMF and the PSA-UPF, and is configured to transmit information such as tunnel identification information of an N3 connection, data buffer indication information, and a downlink data notification message; an N6 interface is a reference point between the UPF and the DN, and is configured to transmit user plane data or the like; an N7 interface is a reference point between the SMF and the PCF; an N8 interface is a reference point between the AMF and the UDM; an N10 interface is a reference point between the SMF and the UDM; an N11 interface is a reference point between the AMF and the SMF; an N12 interface is a reference point between the AMF and the AUSF; an N13 interface is a reference point between the AUSF and the UDM; an N14 interface is a reference point between AMFs; an N15 interface is a reference point between the AMF and the PCF; an N22 interface is a reference point between the AMF and the NSSF; and an N23 interface is a reference point between the PCF and the SMF.

It should be understood that the system architecture applied to this embodiment of this application in FIG. 1 is merely an example of a network architecture described from a perspective of a reference point architecture, and a network architecture applicable to this embodiment of this application is not limited thereto. Any network architecture that can implement functions of the foregoing network elements is applicable to this embodiment of this application.

It should be noted that, names of interfaces between the network elements in FIG. 1 are merely examples, and the interfaces may have other names during specific implementation. This is not specifically limited in this embodiment of this application. In addition, this application does not preclude that, with evolution of technologies, various core network elements may be co-located with each other.

It should be noted that, names of the network elements (such as the SMF, the AF, the UPF, the NDTF, and the NSF) included in FIG. 1 are also merely examples, and do not constitute any limitation on functions of the network elements. In the 5G network and another future network, the foregoing network elements may alternatively have other names. This is not specifically limited in this embodiment of this application. For example, in a 6G network, some or all of the foregoing network elements may use terms in 5G, or may use other names, or the like. This is uniformly described herein. Details are not described below. In addition, it should be understood that, names of messages (or signaling) transmitted between the foregoing network elements are merely examples, and do not constitute any limitation on functions of the messages.

An NWDAF defined by the current 3GPP supports data subscription and collection, data analytics, and analytics result subscription and notification mechanisms thereof, thereby enabling a "solution for perception and assurance of experience of key services". However, in the existing solution, the NWDAF considers service experience of only some services and some users, and provides assurance for those services and users. However, such a solution lacks awareness of an overall network state and lacks overall coordination of service experience of other users in the network. For example, the following cases may occur: (1) When service experience of some users is poor, a dedicated bearer may be established for a specific user to guarantee bandwidth, but this may degrade service experience of common users. (2) In the existing solution, assurance policies are preset in advance. If it is found that experience of a service is poor, a current network status may be indeed poor, and a preconfigured guaranteed bandwidth cannot be supported. In this case, the effect of assurance is not significant. In view of this, this application provides a communication method, so that an assurance policy can be determined based on a current actual network status, to better ensure service experience of users.

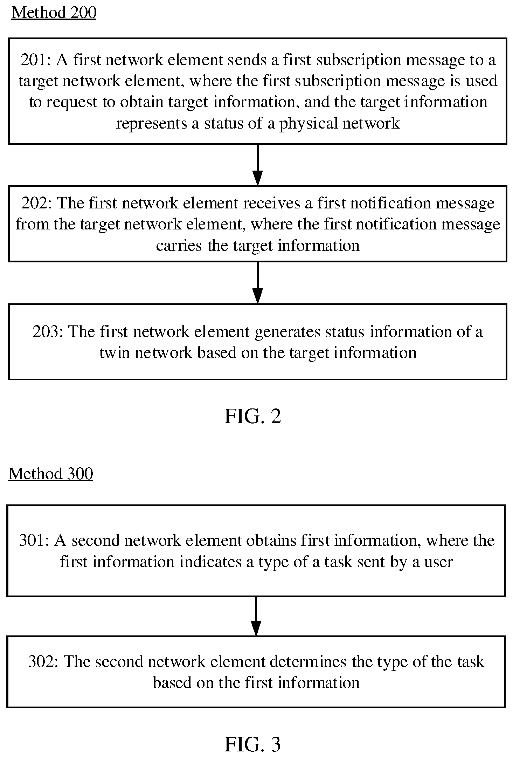

FIG. 2 is a schematic flowchart of a communication method 200 according to this application. The method 200 includes the following steps.

201: A first network element sends a first subscription message to a target network element, where the first subscription message is used to request to obtain target information, and the target information represents a status of a physical network.

In this application, the first network element may be understood as, for example, the NDTF network element described above.

In a possible implementation, if the target network element is an NWDAF network element, the first subscription message may be, for example, an Nnwdaf_DataManagement_Subscribe operation request. For example, the subscription message is used to request to obtain information of a twin object from the NWDAF, and the twin object is in a one-to-one mapping with a physical object. Alternatively, it may be understood that the subscription message is a request for data required for performing digital twin modeling on a network element that needs to be accessed by a user service, a network topology, a VIP user with subscribed assurance, or a key service that requires service experience assurance. Subsequently, the NWDAF may send a subscription request to each specific core network element based on the first subscription request message, to obtain the target information required for digital twin modeling. Further, the NWDAF may generate, based on the first subscription message and the target information, status information of the physical object used for mapping the twin object. For example, the NWDAF may preprocess, based on a dimension of the twin object (for example, a dimension of a network element, a network topology, a user, or a service), the target information collected from each core network element, to generate the status information of the physical object.

202: The first network element receives a first notification message from the target network element, where the first notification message carries the target information.

In this application, the target information includes information of a physical object in the physical network, and the physical object includes at least one of the following: a network element, a network topology, a user, and an application. For example, the physical object may include a network element, a network topology, a user, and an application.

In this application, in a possible implementation, the "target network element" may be, for example, an NWDAF network element. In another possible implementation, the "target network element" may be a core network element such as an AMF, a UPF, or an OAM. It may also be understood that, in this application, the first network element may directly send a subscription message to each core network element, to subscribe to target information on each network element. Alternatively, the first network element may send a subscription request message to the NWDAF, to subscribe to target information on each network element from the NWDAF, and then the NWDAF sends the subscription request message to each specific core network element. In other words, the NWDAF uniformly collects the target information subscribed to on each core network element.

For example, the first subscription request message may carry an identifier of a network element, an identifier of a user, and an identifier of an application. The first subscription request message may further subscribe to an interface of a neighboring network element connected to each network element, traffic statistics, and the like. For example, the first subscription request message may subscribe to, from the UPF, a list of RAN radio base stations interacting with the UPF, traffic data exchanged between base stations, and an identifier of an SMF network element interacting with the UPF, so as to obtain status information of the network topology.

For example, "status information of the network element" includes at least one of the following: a type of the network element, resource specifications of the network element, a quantity of users carried on the network element, distribution of the users carried on the network element, a congestion status of the users carried on the network element, and distribution of network traffic carried on the network element.

The type of the network element may include, for example, a network element name defined in a standard or a network element defined by an operator or an equipment vendor, for example, a UPF, an SMF, a PCF, a UDM, a RAN, or a cell (cell). The "resource specification of the network element" may include, for example, a hardware specification and/or a service specification. For example, the hardware specification may include at least one of the following: a specification of a central processing unit (central processing unit, CPU), a memory specification, and a storage specification. For example, the service specification may include a throughput supported by the network element and/or a quantity of users supported by the network element. "Distribution of the users carried on the network element" may include, for example, a user tier and/or a package used by the user. For example, "distribution of network traffic carried on the network element" may include services of different types, such as video, live broadcast, telephone, and web page services. For another example, "distribution of network traffic carried on the network element" may include services of users at different tiers, such as GoTone, live broadcast, and game services.

For example, "status information of the network topology" includes at least one of the following: a path between network elements, an interface between network elements, a specification of an interface between network elements, traffic carried on an interface between network elements, and distribution of traffic carried on an interface between network elements, and optionally, further includes status information of network elements.

For example, "information of the user" includes at least one of the following: an attribute of the user, subscription information of the user, and a quality of service (quality of service, QoS) parameter corresponding to the user. The "attribute of the user" includes an inherent attribute of the user and a dynamically changing attribute. For example, the "inherent attribute of the user" may include a gender, an age, and the like of the user, and the "dynamically changing attribute of the user" may include, for example, a package subscribed to by the user. The "subscription information of the user" may include, for example, information of the package subscribed to by the user. The "QoS parameter" may include, for example, a bandwidth.

For example, "information of the application" includes at least one of the following: a type of the application, a start time of a service corresponding to the application, duration of the service corresponding to the application, a throughput of traffic used by the service corresponding to the application, a rate of traffic used by the service corresponding to the application, service experience of the application, and a quality of service QoS parameter for carrying the application.

In a possible implementation, the NWDAF sends the first notification message to the first network element, where the first notification message carries status information of the physical object, the status information of the physical object is used to generate status information of a twin object, the twin object is in a one-to-one mapping with the physical object, and the status information of the twin object is used to monitor the status and service experience of the physical network. For example, the first notification message may be Nnwdaf_DataManagement_Notify.

203: The first network element generates status information of a twin network based on the target information.

In this application, the status information of the twin network includes the status information of the twin object.

Based on the foregoing technical solution, the NDTF network element generates the status information of the twin network by obtaining status information of one or more physical objects in the physical network. Therefore, the status information of the twin network can reflect current status information of the entire network in one or more dimensions, and the status and service experience of the entire physical network can be monitored based on the status information of the twin network. The twin network may be synchronized with the physical network in real time, thereby improving efficiency of perceiving an actual status of the physical network. In addition, when relatively poor service experience is detected, other network elements are notified in a timely manner, so that the other network elements can be assisted in determining a target assurance policy based on the current actual status of the physical network, thereby better ensuring service experience.

FIG. 3 is a schematic flowchart of a communication method 300 according to this application. The method 300 includes the following steps.

301: A second network element obtains first information, where the first information indicates a type of a task delivered by a user.

In this application, the second network element may be understood as, for example, the AI agent described above.

In a possible implementation, the second network element may receive the first information from the user. In another possible implementation, the second network element may receive the first information from an operator. For example, the operator sends a user intent to the second network element by using a voice or text description. For example, the user intent is: requesting a network to analyze and present service access information of a VIP user or user group and a service experience change trend, and improve experience of an application APP. In still another possible implementation, the first information is preset in the second network element in advance, and the first information may indicate the user intent.

302: The second network element determines the type of the task based on the first information.

The type of the task in this application includes at least one of the following: a task of monitoring a target event, a task of determining a target assurance policy, a task of requesting simulation, and a task of evaluating an effect of service experience after the target assurance policy is executed in a physical network.

For example, the second network element may understand, based on a multi-modal large model, the first information sent by the operator, and determine the type of the task.

The following separately describes application scenarios corresponding to different tasks.

### Scenario 1: Task of monitoring the target event

In a possible implementation, the second network element may send a second subscription message to a first network element, where the second subscription message is used to subscribe to monitoring of the target event from the first network element. The second network element receives a second notification message from the first network element, where the second notification message indicates that service experience of an application corresponding to the target event is relatively poor.

For example, the second subscription message carries an identifier of the target event and an identifier of a target twin object corresponding to the target event, where the twin object is in a one-to-one mapping with a physical object, the physical object includes at least one of the following: a network element, a network topology, a user, and a service, and status information of each twin object is used to monitor a status and service experience of the physical network. For example, the identifier of the target twin object includes at least one of the following: an identifier of a target user, an identifier of a target service, and an identifier of a target cell. Specifically, status information of each physical object may be understood with reference to the description in the method 200, and details are not described again.

For example, the second notification message carries at least one of the following: the identifier of the target user, the identifier of the target service, the identifier of the target cell, experience information of the target user accessing the target service, and an indicator of the target user accessing the target service.

For example, the target event includes at least one of the following: service experience of the target service of the target user, a congestion status of the target cell in which the target user is located, the congestion status of the target cell, and service experience of a service in the target cell.

### Scenario 2: Task of determining the target assurance policy

In a possible implementation, the second network element may send a second subscription message to the first network element, where the second subscription message is used to request to monitor the target event; the second network element receives a second notification message from the first network element, where the second notification message indicates that service experience of an application corresponding to the target event is relatively poor; and the second network element determines, based on the second notification message, a target guaranteed bandwidth and a target assurance policy corresponding to the target event.

For example, the target assurance policy includes at least one of the following: updating or adding a dedicated bearer with a guaranteed bit rate (guaranteed bit rate, GBR), updating or adding a quality of service flow identifier (QoS flow identifier, QFI), deleting or updating a dedicated bearer established in the target cell, deleting or updating a quality of service flow identifier QFI established in the target cell, limiting bandwidths of some non-real-time services in the target cell, and limiting bandwidths of services based on different user tiers in the target cell.

### Scenario 3: Task of requesting simulation

In a possible implementation, the second network element sends a second request message to a third network element, where the second request message carries an identifier of the target event and the target assurance policy, and the second request message is used to request to simulate an effect generated after the target assurance policy is executed in the physical network; the second network element receives a second response message from the third network element, where the second response message carries a simulation result; and the second network element determines, based on the simulation result, a target assurance policy corresponding to the target event.

In this application, for example, the third network element may be understood as the network simulation function network element described above.

In this scenario, that the second network element determines, based on the simulation result, the target assurance policy corresponding to the target event may also be understood as follows: The second network element may redetermine the target assurance policy based on the simulation result. For example, the second network element may use a determined policy. For another example, the second network element may readjust the target assurance policy based on the simulation result.

### Scenario 4: Task of evaluation

In a possible implementation, the second network element receives first indication information from the first network element, where the first indication information indicates that status information of a target twin object corresponding to the target event changes; and the second network element evaluates, based on the first indication information, the effect of service experience after the target assurance policy is executed in the physical network.

For example, the second network element may send changed information based on the status information of the target twin object reported by the first network element, evaluate an effect of executing the target assurance policy in the physical network, and perform continuous learning and recording, to enhance an intelligent and fine-grained policy adjustment capability.

Based on the foregoing technical solution, a function of the AI agent is extended in this application. For example, the AI agent may support understanding and decomposition of a user intent by using an intent framework, and implement dynamic delivery and perception and present service experience of the target user by using an NDTF network element and the network simulation function network element. The AI agent may work with the network simulation function network element to implement intelligent decision-making on a service experience optimization policy and execution of the optimization policy. Based on policy execution, the AI agent completes effect evaluation and reinforcement learning, thereby forming a complete closed-loop solution.

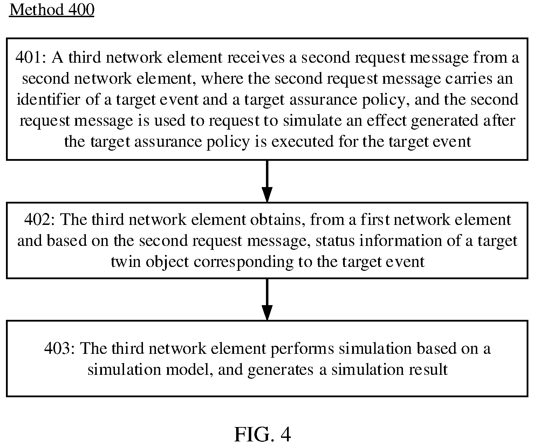

FIG. 4 is a schematic flowchart of a communication method 400 according to this application. The method 400 includes the following steps.

401: A third network element receives a second request message from a second network element, where the second request message carries an identifier of a target event and a target assurance policy, and the second request message is used to request to simulate an effect generated after the target assurance policy is executed in a physical network.

In this application, the third network element may be understood as, for example, the network simulation function network element described above.

For example, information of the target assurance policy includes at least one of the following: updating or adding a dedicated bearer with a guaranteed bit rate GBR, updating or adding a quality of service flow identifier QFI, deleting or updating a dedicated bearer established in a target cell, deleting or updating a quality of service flow identifier QFI established in the target cell, limiting bandwidths of some non-real-time services in the target cell, and limiting bandwidths of services based on different user tiers in the target cell.

In this application, the target event includes at least one of the following: service experience of a target service of a target user, a congestion status of the target cell in which the target user is located, the congestion status of the target cell, and service experience of a service in the target cell.

402: The third network element obtains, from a first network element and based on the second request message, status information of a target twin object corresponding to the target event.

The twin object is in a one-to-one mapping with a physical object, the physical object includes at least one of the following: a network element, a network topology, a user, and a service, and status information of each twin object is used to monitor a status and service experience of the physical network. Specifically, for the status information of each physical object, refer to the foregoing description of the method 200. Details are not described again.

In a possible implementation, the third network element sends a first request message to the first network element based on the second request message, where the first request message is used to request to obtain the status information of the target twin object; and the third network element receives a first response message from the first network element, where the first response message carries the status information of the target twin object. For example, the first request message carries an identifier of the target cell. The status information of the target twin object includes at least one of the following: utilization of physical resource blocks PRBs in the target cell, a quantity of target users included in the target cell, a quantity of packets and a quantity of bytes transmitted in the target cell, a guaranteed bandwidth of a dedicated bearer allocated to the target cell, and a guaranteed bandwidth of a quality of service flow identifier QFI of the target cell.

403: The third network element performs simulation based on the status information of the target twin object, the target assurance policy, and a simulation model, and generates a simulation result.

Specifically, an input of the simulation model includes the status information of the target twin object, the target assurance policy, and the simulation model for simulation.

For example, the simulation result may include service experience information of the target user after the target assurance policy is executed in the physical network, and status information of the target cell after the target assurance policy is executed in the physical network.

Based on the foregoing technical solution, the network simulation function network element may perform simulation based on a request message of an AI agent. The network simulation function network element may obtain status information of a required target twin object from an NDTF before the simulation, and send a simulation result to the AI agent. The AI agent finally determines an assurance policy. Through the simulation performed by the network simulation function network element, it may be predicted in advance whether a target assurance policy is suitable for a current network status and whether service experience of a user can be improved.

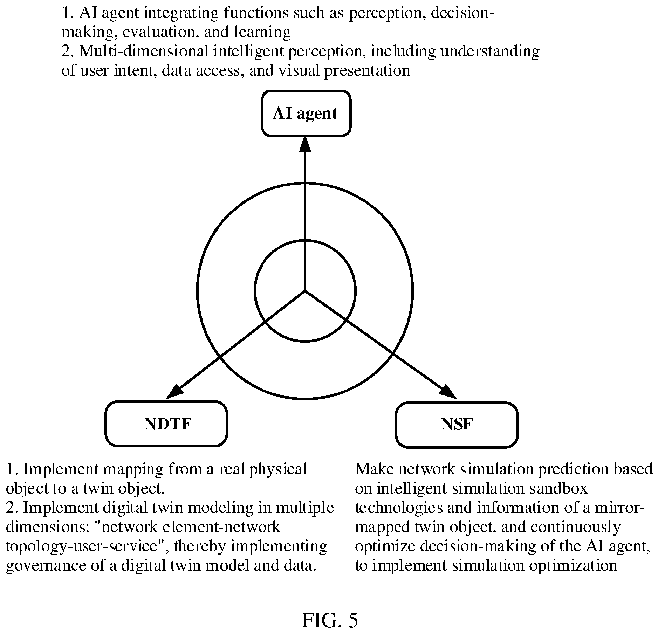

FIG. 5 is a diagram of a relationship between an AI agent, an NDTF, and a network simulation function network element according to this application. As shown in FIG. 5, the AI agent in this application is an AI agent that integrates functions such as perception, decision-making, evaluation, and learning. The AI agent may implement multi-dimensional intelligent perception such as understanding of a user intent, data access, and visual presentation. In this application, the AI agent may drive the network simulation function network element to simulate an assurance policy and perform intelligent decision-making. The "network simulation function network element" in this application can make network simulation prediction based on an intelligent simulation sandbox technology and information of a mirror-mapped twin object, and continuously optimize the decision-making of the AI agent, to implement simulation optimization. The NDTF in this application may implement a mapping from a real physical object to a twin object, which may also be understood as mapping network data to data corresponding to the twin object. In this way, virtual-physical integration is achieved. For example, the mapping may be performed based on expert experience in network twin object modeling. In addition, the NDTF in this application may use, for example, a multi-dimensional large model for network services, to implement digital twin modeling in multiple dimensions: "network element-network topology-user-service", thereby implementing governance of a digital twin model and data.

The following describes in detail the technical solutions provided in this application with reference to specific embodiments and interaction between specific core network elements in a core network.

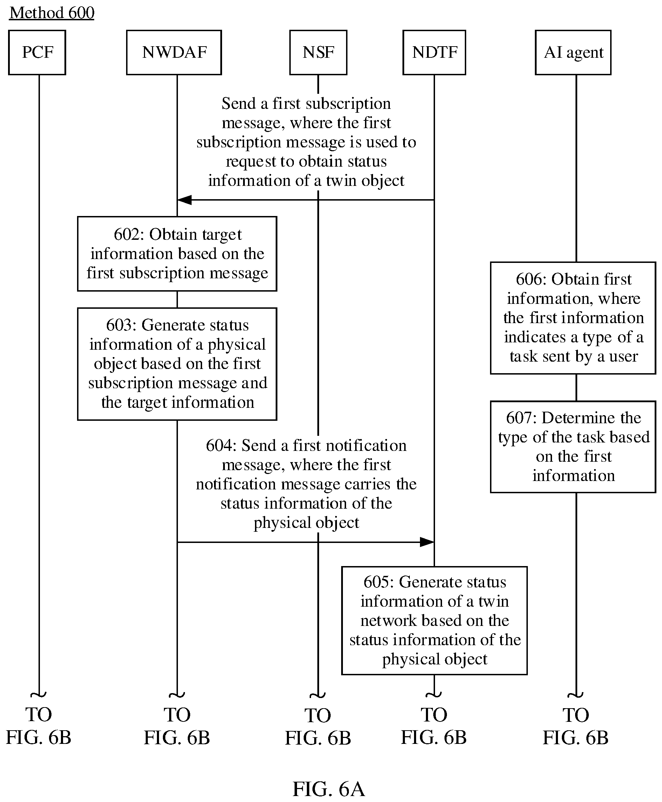

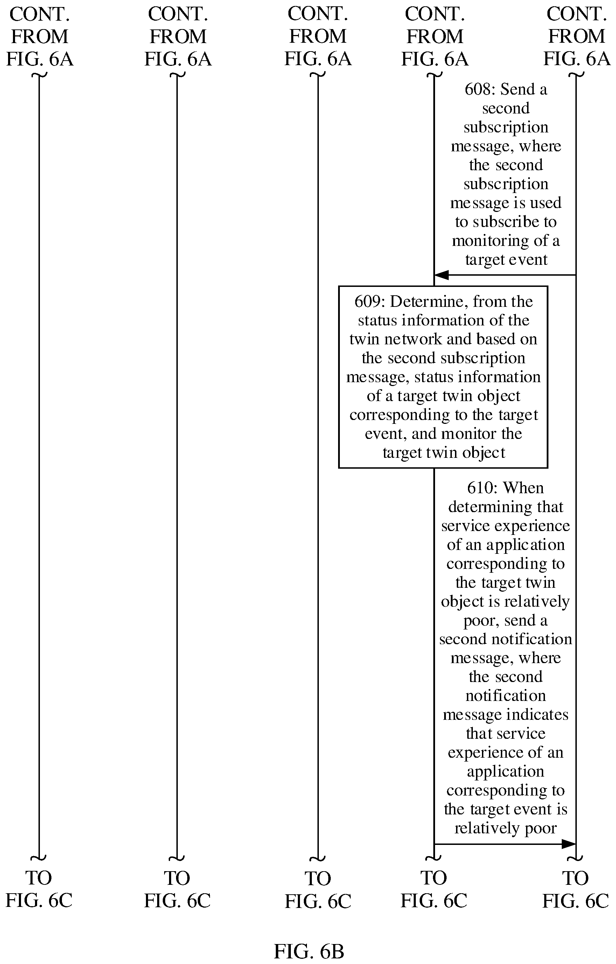

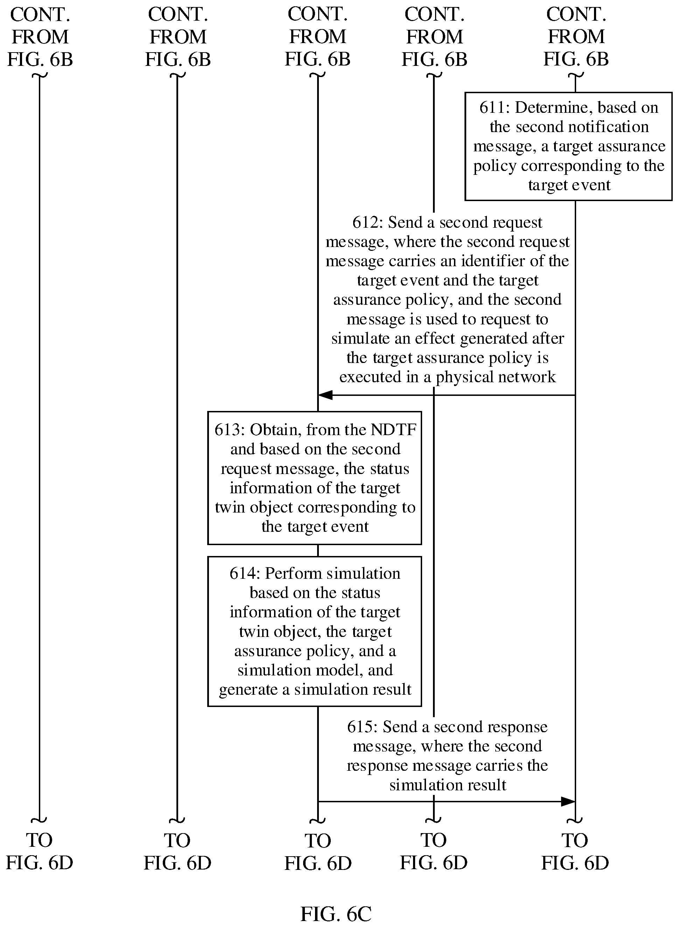

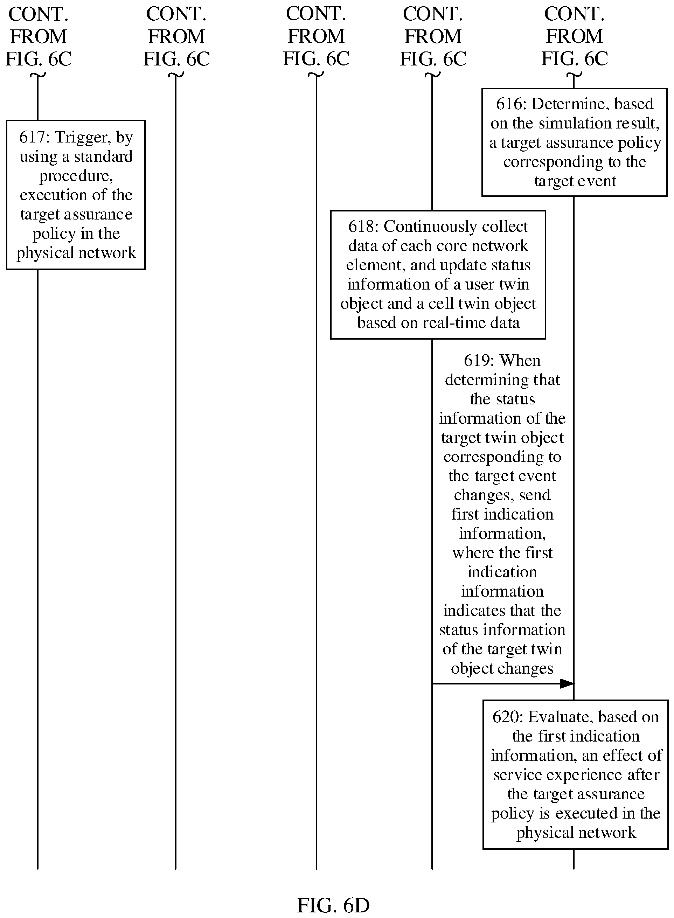

FIG. 6A to FIG. 6D are a schematic flowchart of a communication method 600 according to this application. As shown in FIG. 6A to FIG. 6D, the method includes the following steps.

601: An NDTF sends a first subscription message to an NWDAF, where the first subscription message is used to request to obtain target information.

Correspondingly, the NWDAF receives the first subscription message from the NDTF.

In this application, the target information represents information of a physical object in a physical network, and the physical object includes at least one of the following: a network element, a network topology, a user, and a service.

For example, the NDTF may initiate a data subscription instruction to the NWDAF by using a "network data analytics function_data management service_subscription operation" Nnwdaf_Data Management_Subscribe (an example of the first subscription message) service. Parameters carried in the subscription message include at least one of the following: a list of twin network elements (for example, UE, a RAN, and a UPF) in a service-related network topology, a list of subscribed VIP users (for example, including user identifiers), a list of key services requiring experience assurance (for example, service identifiers), and the like.

602: The NWDAF obtains the target information based on the first subscription message.

Optionally, the NWDAF may separately initiate an event subscription request to the UPF, an AMF, and an OAM.

For example, by using Nupf_EventExposure_Subscribe, the NWDAF may subscribe to a service accessed by a subscribed VIP user and experience information of the service. Based on the received subscription request message and a list of identifiers of VIP users with subscribed assurance and a list of key services requiring experience assurance that are carried in the message, the UPF may start collection and reporting processing of the service accessed by the VIP user and experience information of the service. For example, the UPF may report the target information to the NWDAF by using an Nupf_Event Exposure_Notify message. For example, the notification message may carry one or more of the following: a user identifier, a service type, quality of experience (quality of experience, QoE) data, and a key performance indicator (key performance indicator, KPI). For example, the KPI may include a delay, a bandwidth, a rate, and the like corresponding to the service.

For example, by using Namf_EventExposure_Subscribe, the NWDAF may subscribe to real-time location information of a subscribed VIP user from the AMF. The AMF collects real-time location information of a specified user based on the received subscription request message and a list of identifiers of VIP users with subscribed assurance that is carried in the message. For example, the AMF may report the target information to the NWDAF by using Namf_EventExposure_Notify.

For example, the NWDAF may subscribe to device information and a KPI indicator of the RAN from the OAM by using OAM_Subscribe. The OAM may periodically collect a KPI indicator of a specified cell based on the received subscription request message. For example, information such as utilization of physical resource blocks (physical resource blocks, PRBs), a quantity of users, and traffic may be collected, and the target information is reported to the NWDAF.

It should be noted that, in this application, for detailed descriptions of the subscription message and the notification message of each network element, refer to descriptions in a protocol. The messages are not described in detail in this application.

603: The NWDAF generates status information of the physical object based on the first subscription message and the target information.

For example, the NWDAF may preprocess, in a twin object dimension (that is, a twin network element (a terminal device UE, the radio RAN, or the UPF user plane function entity), the subscribed VIP user, or a key service that requires experience assurance) in a service-related network topology, the target information reported by the UPF, the AMF, or the OAM, to generate the status information of the physical object used to map a twin object.

604: The NWDAF sends a first notification message to the NDTF, where the first notification message carries the status information of the physical object.

Correspondingly, the NDTF receives the first notification message from the NWDAF.

For example, the first notification message may be Nnwdaf_DataManagement_Notify.

In this application, the physical object is in a one-to-one mapping with the twin object, the status information of the physical object is used to generate status information of the twin object, and the status information of the twin object is used to monitor a status and service experience of the physical network.

605: The NDTF generates status information of a twin network based on the status information of the physical object.

It should be noted that, in another possible implementation, if the NDTF directly collects information from each core network element, the NDTF may directly generate the status information of the twin network based on the collected target information. In this embodiment, because the NDTF sends the subscription message to the NWDAF to collect information, after the NWDAF collects the target information, the NWDAF may first preprocess the target information to generate the status information of the physical object, so that the NDTF can use the status information of the physical object more conveniently to generate the status information of the twin object, and further generate the status information of the twin network.

In this application, the status information of the twin network includes the status information of the twin object.

For example, the NDTF performs, based on the target information, digital twin modeling on the network element accessed by the user service, the network topology, the VIP user with subscribed assurance, or the key service that requires experience assurance. As described above, in this application, in another possible implementation, the NDTF may also directly invoke an EventExposure_Subscribe event exposure subscription service of a device such as the UPF, the AMF, or the OAM to obtain respective target information.

In this application, after modeling is completed, the NDTF may provide subscription and notification interfaces for the status information of the twin object to the outside by using Nndtf_TwinsStatus_Subscribe and Nndtf_TwinsStatus_Notify.

The following describes a subscription message and a notification message of the NDTF in this application. For example, the messages may be defined in the following manner:
Service operation name: Nndtf_TwinsStatus_Subscribe.
Service description: An AI agent or other core network elements subscribe to a twin status event from an NDTF network twin.

Mandatory input parameters: a network twin ID (for example, a user twin object and a cell twin object), a notification correlation ID, and an event ID (an event for monitoring key service experience of a user, an event for monitoring a status of a cell to which the user belongs, an event for monitoring service access experience of the user in a congested cell, or an event for monitoring a status of a specified cell).

Optional input parameters: a UE ID, an event-specific parameter, a policy timestamp, an application ID, a flow filter condition, and the like.

Mandatory output parameters: data and status of the network twin.

Optional output parameter: none.

Service operation name: Nndtf_TwinsStatus_Notify.

Service description: When the AI agent or other core network elements subscribe to a twin status event from the NDTF network twin, the NDTF notifies, by using this service, the AI agent or other core network elements of event information related to the data and status of one or more network twins.

Mandatory input parameters: a network twin ID (for example, a user twin object and a cell twin object), a notification correlation ID, and an event ID (an event for monitoring key service experience of a user, an event for monitoring a status of a cell to which the user belongs, an event for monitoring service access experience of the user in a congested cell, or an event for monitoring a status of a specified cell).

Optional input parameters: a UE ID, an event-specific parameter, a policy timestamp, an application ID, a flow filter condition, and the like.

Mandatory output parameters: data and status of the network twin.

Optional output parameter: none.

In addition, as described above, the AI agent in this application is an intelligent functional entity that can sense environment, make decisions, and perform actions. In this application, the AI agent receives a task delivered by an operator in a form of voice, text, or configuration files and requiring that for a VIP user who has subscribed to service experience assurance, key service experience of the VIP user should be ensured on a basis that overall experience in a cell is controllable.

It should be noted that, compared with the foregoing steps 601 to 605, the following steps 606 and 607 are not limited to a specific action sequence. In other words, steps 606 and 607 may be performed in parallel with steps 601 to 605, or may be performed before steps 601 to 605. This is not limited.

606: The AI agent obtains first information, where the first information indicates a type of a task delivered by a user.

For example, the AI agent receives the first information from the user, where the first information may indicate the type of the task delivered by the user (which may also be understood as a user intent). For example, the type of the task in this application may be at least one of the following: a task of monitoring a target event, a task of determining a target assurance policy, a task of requesting simulation, and a task of evaluating an effect of service experience after the target assurance policy is executed in the physical network.

607: The AI agent determines the type of the task based on the first information.

In this embodiment, it is assumed that the type of the task delivered by the user is the task of monitoring the target event. Therefore, the AI agent determines, based on the first information, that the type of the task is the task of monitoring the target event.

Further, in a possible scenario, the task of monitoring the target event may be specifically: monitoring service experience of a target service of a target user, and monitoring a congestion status of a target cell in which the target user is located. For example, the target user may be a VIP user. In another possible scenario, the task of monitoring the target event may be specifically monitoring a congestion status of a target cell and service experience of a service in the target cell. For example, the target user is specified cells or specified congested cells.

For example, the task received by the AI agent is a task of intelligently ensuring differentiated service experience control for users at different tiers in a congested cell.

For example, the AI agent receives the first information from the user, and decomposes the first information into the following three tasks: obtaining a twin object status of a specified user, perceiving application experience of a specified APP, and improving application experience of the APP.

608: The AI agent sends a second subscription message to the NDTF, where the second subscription message is used to subscribe to monitoring of the target event.

Correspondingly, the NDTF receives the second subscription message from the AI agent.

In this application, the second subscription message may carry an identifier of the target event and an identifier of a target twin object corresponding to the target event. For example, the identifier of the target twin object includes at least one of the following: an identifier of the target user, an identifier of the target service, and an identifier of the target cell.

For example, the AI agent may send an Nndtf_TwinsStatus_Subscribe message (an example of the second subscription message) to the NDTF. For example, the message carries at least one of the following: a list of identifiers of VIP users, subscription attributes of the VIP users (used to define to-be-monitored twin objects corresponding to the users), an identifier of an event for monitoring key service experience of a user, an identifier of an event for monitoring a status of a cell to which the user belongs, and the like.

For example, the AI agent may send an Nndtf_TwinsStatus_Subscribe message to the NDTF. For example, the message carries at least one of the following: a list of specified cell identifiers, a cell congestion attribute, an identifier of an event for monitoring service access experience of a user in a congested cell, an identifier of an event for monitoring a status of a specified cell, and the like.

609: The NDTF determines, from the status information of the twin network and based on the second subscription message, status information of the target twin object corresponding to the target event, and monitors the target twin object.

For example, after the NDTF receives a task of monitoring service experience of target services of target users and a task of monitoring a congestion status of target cells in which the target users are located, the NDTF may filter out, based on the list of the identifiers of the VIP users and the subscription attributes of the VIP users that are carried in the second subscription message, to-be-monitored user twin objects corresponding to the VIP users, and start to monitor access experience of application twin objects corresponding to key services accessed by the user twin objects corresponding to these users, then scan information of the cells to which the user twin objects belong, and monitor the cell twin objects. Correspondingly, twin object data of the user twin objects and the cell twin objects may be refreshed in real time by using the data collection manner in the previous step.

For example, after the NDTF receives the task of monitoring the congestion status of the target cell and the task of monitoring the service experience of the service in the target cell, the NDTF may monitor, based on the list of specified cell IDs and the cell congestion attribute that are carried in the second subscription message, a congestion status of a cell twin object that meets a condition, and when perceiving a status change of the congested cell, collect service access and experience information of a user twin object in the cell in real time. Correspondingly, twin object data of the user twin object and the cell twin object may be refreshed in real time by using the data collection manner in the previous step.

For example, the NDTF obtains, based on the received tasks, two event subscription tasks: a status of a specified user twin object and perception of application experience, and queries the user twin object status based on the delivered list of specified user IDs. For example, the NDTF may send at least one of the following to the AI agent by using a second notification message: a specified user ID, a user cell location change, an access service list, a service access KPI and experience information thereof, and the like. In this case, the AI agent generates a visual service distribution chart, a service trend chart, an experience change trend chart, a location change trend chart, and the like based on the received second notification message, and feeds back the charts to the user, to present visual charts to the user.

610: When the NDTF determines that service experience of an application corresponding to the target twin object is poor, the NDTF sends a second notification message to the AI agent, where the second notification message indicates that service experience of an application corresponding to the target event is relatively poor.

Correspondingly, the AI agent receives the second notification message from the NDTF.

For example, the second notification message carries at least one of the following: the identifier of the target user, the identifier of the target service, the identifier of the target cell, experience information of the target user accessing the target service, and an indicator of the target user accessing the target service. For example, the indicator may be a KPI indicator.

For example, when perceiving that service experience of an application twin object corresponding to a VIP user deteriorates, the NDTF may send an Nndtf_TwinsStatus_Notify message to the AI agent to notify the AI agent.

611: The AI agent determines, based on the second notification message, a target assurance policy corresponding to the target event.

For example, based on the second notification message and with reference to the status information of the cell in which the user is located, the AI agent obtains, from memory, a guaranteed bandwidth (for example, a guaranteed bandwidth requirement is GBR > 10 Mbps) required for a key service accessed by the VIP user at a specific resolution (for example, the specific resolution is 1080P) required for experience assurance, to determine the target assurance policy. For example, the target assurance policy is: determining, based on a status of a cell twin object in which the user is located, that a GBR dedicated bearer or QFI needs to be added for simulation, to predict a user experience change in key service experience and impact on experience of other users in the cell.

For example, based on the second notification message and service access information of users in the cell, the AI agent obtains a list of non-real-time experience-insensitive services of the users from memory, and a guaranteed bandwidth (for example, a guaranteed bandwidth requirement is GBR > 10 Mbps) required for adaptive bit rate (adaptive bitrate, ABR) services of users at different tiers at a specific resolution (for example, the specific resolution is 1080P) required for experience assurance, to determine the target assurance policy. For example, the target assurance policy is: deleting or updating dedicated bearers or QFIs that have been established for some users, and limiting bandwidths of some non-real-time services (for example, limiting a bandwidth of a peer to peer (peer to peer, P2P) or file transfer protocol (file transfer protocol, FTP) file download service), limiting bandwidths to restrict ABR video services to different resolution levels based on different user tiers (for example, guaranteeing a 720P video bit rate with a maximum bandwidth of 5 Mbps for a VIP user, and guaranteeing a 360P video bit rate with a maximum bandwidth of 2 Mbps for a common user), and the like.

612: The AI agent sends a second request message to a network simulation function network element, where the second request message carries the identifier of the target event and the target assurance policy, and the second request message is used to request to simulate an effect generated after the target assurance policy is executed in the physical network.

Correspondingly, the network simulation model receives the second request message from the AI agent.

For example, the AI agent sends a Twin_Function_Simulation_Request message (an example of the second request message) to the network simulation function network element, where the request message carries at least one of the following: information of a cell in which a VIP user is located, a type of a service requiring assurance for a user, an information policy of an added or updated GBR dedicated bearer or QFI, and the like, or the request message carries at least one of the following policies: deleting or updating dedicated bearers and QFIs that have been established for some users, limiting bandwidths of some non-real-time services, making a bandwidth adjustment to restrict ABR video services to different resolution levels based on different user tiers, and the like. In addition, the request message further carries the identifier of the target event, where the identifier of the target event corresponds to a corresponding monitoring task.

The following briefly describes the Twin_Function_Simulation_Request message. For example, the Twin_Function_Simulation_Request message may be defined in the following manner.

Service operation name: Twin_Function_Simulation_Request.

Service description: a simulation function service and interface provided by the network simulation function network element.

Mandatory input parameter: a simulation function ID (for example, a simulation instruction for adding a GBR dedicated bearer or QFI in the target cell).

Optional input parameters: a twin object ID (for example, a user twin and a cell twin in experience assurance) and a policy to be executed (for example, a GBR dedicated bearer or QFI to be added).

Mandatory output parameter: a simulation result (a cell status prediction result and user experience change data).

Optional output parameter: none.

613: The network simulation function network element obtains, from the NDTF and based on the second request message, the status information of the target twin object corresponding to the target event.

In a possible implementation, the network simulation function network element sends a first request message to the NDTF based on the second request message, where the first request message is used to request to obtain the status information of the target twin object. The NDTF sends a first response message to the network simulation function network element based on the first request message, where the first response message carries the status information of the target twin object.

For example, the status information of the target twin object includes at least one of the following: utilization of physical resource blocks PRBs in the target cell, a quantity of target users included in the target cell, a quantity of packets or bytes transmitted in the target cell, a guaranteed bandwidth of a dedicated bearer allocated to the target cell, and a guaranteed bandwidth of a quality of service flow identifier QFI of the target cell.

For example, the network simulation function network element sends an Nndtf_TwinsMapping_Request message (an example of the first request message) to the NDTF, requesting to map the twin object, where the message carries at least one of the following: an identifier of a cell in which a VIP user is located. The NDTF sends an Nndtf_TwinsMapping_Response message (an example of the first response message) to the network simulation function network element, where the message carries current status information of the cell twin object (for example, may include information such as utilization of PRBs in the cell, a quantity of users, uplink and downlink traffic, an allocated dedicated bearer, or a guaranteed bandwidth scale of a QFI of the cell).

614: The network simulation function network element performs simulation based on a simulation model, and generates a simulation result.

An input of the simulation model includes the status information of the target twin object and the target assurance policy.

For example, the network simulation function network element may perform, based on the simulation model, function simulation to predict a user experience change in key service experience and impact on experience of other users in the cell. In a possible implementation, the network simulation function network element may load a twin object instance and a functional model, and perform the following function simulation in a simulation sandbox: deleting or updating an established dedicated bearer or QFI, limiting bandwidths of some non-real-time services, and making a bandwidth adjustment to restrict ABR video services to different resolution levels based on different user tiers.

615: The network simulation function network element sends a second response message to the AI agent, where the second response message carries the simulation result.

For example, the simulation result includes at least one of the following: service experience information of the target user after the target assurance policy is executed, and status information of the target cell after the target assurance policy is executed. Optionally, the simulation result further includes service experience information of other users in the target cell than the target user.

For example, the network simulation function network element may send a Twin_Function_Simulation_Response message (an example of the second response message) to the AI agent, where the message carries the simulation result. For example, the simulation result includes information such as a change of key service experience of the VIP user, a cell status change, and whether experience of other users in the cell can be higher than a specified threshold is acceptable after GBR assurance is performed. For another example, the simulation result includes information such as a cell status change and a user differentiated service experience change after the policy is executed.

616: The AI agent determines, based on the simulation result, a target assurance policy corresponding to the target event.

For example, the AI agent may intelligently adjust the target assurance policy based on the simulation result. For example, if the service experience is still poor after simulation, the guaranteed bandwidth may be increased, or the guaranteed bandwidth needs to be decreased when the experience of other users in the cell is severely affected after simulation, or QoS policies of some low-priority users are adjusted to save bandwidths for VIP users.

For example, the AI agent intelligently adjusts the target assurance policy based on the simulation result. For example, if the cell congestion persists after simulation, the GBR guaranteed bandwidth may be reduced, the bandwidths of non-real-time services may be further reduced, and resolutions and required bandwidths of ABR video services may be reduced.

In this application, simulation can be verified for a plurality of times. If experience of a VIP user can be improved while experience of other users in the cell is ensured, the NWDAF may be notified of a related analytics result and information about an executed policy by using extended Nnwdaf_AnalyticsInfo_ContextTransfer, and the NWDAF notifies a PCF by using Nnwdaf_AnalyticsSubscription_Notify, to establish a dedicated bearer or a QFI to ensure service experience of the VIP user.

In a possible implementation, the NWDAF supports extending ServiceExperienceOptimization_Analysis, to provide subscription and query functions for an analytics result based on a quality of service optimization policy. For example, key fields are described as follows:
(1) Subscription event, where event = IntelligentCellCongestionControl_Analysis.
(2) Subscribed cell identifier.
(3) Subscribed session identifier (used to notify the PCF to make a policy adjustment for a user in a cell that requires congestion control), using supi and pduSeId fields, where supi and pduSeId uniquely determine a PDU session, and optionally, a GPSI field is carried.
(4) Subscribed user identifier, using ueIpv4/ueIpv6 and ipDomain fields, where ueIpv4/ueIpv6 and ipdomain uniquely determine a user.
(5) Service identifier, carried by appIds in eventSubscriptions, where experience of services identified by a plurality of service IDs may be monitored at the same time.
(6) NWDAF analytics notification target, carried by a notificationURI field.

For example, the subscription message and the notification message may carry one or more of the following: an App ID, QoE, a 5QI, an ARP, an uplink guaranteed bit rate (UL guaranteed bitrate), and a downlink guaranteed bit rate (DL guaranteed bitrate). The App ID is an application identifier, QoE is an application service experience score returned by the NWDAF, the 5QI is a recommended 5QI obtained through analytics by the AI agent, the ARP is a recommended ARP obtained through analytics by the AI agent, the uplink guaranteed bit rate is a recommended uplink guaranteed bandwidth obtained through analytics by the AI agent, and the downlink guaranteed bit rate is a recommended downlink guaranteed bandwidth obtained through analytics by the AI agent. Specifically, for meanings represented by the fields, refer to the following description in Table 1.

**Table 1**

| Attribute name (Attribute name) | Data type (Data type) | Description (Description) | Applicability (Applicability) |
|---|---|---|---|
| App ID | Array (array) | Application identifier | Location service experience analytics |
| QoE | Array (array) | Application service experience score | Location service experience analytics |
| 5QI | 5QI | Recommended 5QI obtained through analytics | 5QI authorized for a service data flow |
| ARP | ARP | Recommended ARP obtained through analytics | Allocation and retention priority of the service data flow, including a priority, a preemption capability, and a preemption vulnerability |
| Uplink guaranteed bit rate | Uplink guaranteed bit rate | Recommended uplink guaranteed bandwidth obtained through analytics | Uplink guaranteed bit rate authorized for the service data flow |
| Downlink guaranteed bit rate | Downlink guaranteed bit rate | Recommended downlink guaranteed bandwidth obtained through analytics | Downlink guaranteed bit rate authorized for the service data flow |

617: The PCF triggers, by using a standard procedure, execution of the target assurance policy in the physical network.

For example, the PCF triggers, by using a standard procedure, an SMF, the UPF, the RAN, and the UE to establish a GBR-guaranteed dedicated bearer or QFI for a VIP user, and a service of the VIP user is carried on the corresponding QFI or dedicated bearer.

For example, the PCF triggers policy execution by using a standard procedure, to delete or update an established dedicated bearer or QFI, limit bandwidths of some non-real-time services, and make a bandwidth adjustment to restrict ABR video services to different resolution levels based on different user tiers.

618: The NDTF continuously collects data of each core network element by using the NWDAF, and updates status information of the user twin object and the cell twin object based on real-time data.

For example, the NDTF obtains updated target information of the target network element, where the updated target information is generated after the target assurance policy is executed in the physical network. The NDTF updates the status information of the twin network based on the updated target information.

619: When the NDTF determines that the status information of the target twin object corresponding to the target event changes, the NDTF sends first indication information to the AI agent, where the first indication information indicates that the status information of the target twin object changes.

Correspondingly, the AI agent receives the first indication information from the NDTF.

620: The AI agent evaluates, based on the first indication information, the effect of service experience after the target assurance policy is executed in the physical network.

For example, the AI agent evaluates, based on second indication information reported by the NDTF, an effect of executing the target assurance policy in the physical network, and performs continuous learning and recording, thereby enhancing an intelligent and fine-grained policy adjustment capability.

The AI agent evaluates an execution result of a service experience improvement task for the specified user based on the first indication information reported by the NDTF. If an expected effect is achieved, the AI agent notifies the user that the task is completed. Otherwise, the AI agent continues to adjust the policy to perform the experience optimization task. The number of iterations of the optimization measure is configurable.

It can be learned from the foregoing technical solution that this application provides a new mechanism for ensuring service experience of a user. First, an NDTF constructs a twin network, and monitors a specific twin object. When perceiving that experience of a specific service is relatively poor, the NDTF sends a notification to an AI agent, and the AI agent preliminarily generates a target assurance policy based on a current actual status of a physical network. Then a network simulation network element may perform simulation on the target assurance policy. A purpose of the simulation is to determine whether service experience is improved after the target assurance policy is executed based on a current status of the real physical network, and to what extent the entire physical network is affected. If a simulation effect is good, the NWDAF can send the target assurance policy to the actual physical network. If the simulation effect is poor, the AI agent needs to adjust the assurance policy and perform simulation again until a relatively good target assurance policy is obtained through the adjustment and optimization. Finally, the target assurance policy is executed in the actual physical network. Further, the AI agent may further evaluate an effect of executing the target assurance policy in the physical network, so as to continuously learn and improve decision-making.

In other words, in this application, the twin network may be generated based on the current actual status of the physical network. The AI agent generates the target assurance policy or another management and control policy based on perception of the twin network, and then performs function simulation of assurance or other management and control policies on the corresponding twin object to determine an implementation effect of the target policy, so as to select an optimal policy to better ensure service experience of the user.

Based on the foregoing technical solution, in this application, three functional entities, that is, the AI agent, the NDTF, and the network simulation function network element, are combined with existing data collection, data analytics, and analytics result subscription and notification mechanisms of the NWDAF on an intelligent plane. The AI agent is extended. Based on subscription and notification mechanisms for a network twin, the AI agent implements network twin modeling, virtual-physical mapping, and status perception for twin objects such as a radio cell, a user, and a service, and may work with the network simulation function network element to implement intelligent decision-making on a service experience optimization policy and execution of the optimization policy. Based on policy execution, the AI agent completes effect evaluation and reinforcement learning, thereby forming a complete closed-loop solution. This solution can better ensure service experience of the user.

It may be understood that in this application, both "when" and "if" mean that an apparatus performs corresponding processing in an objective situation, and are not intended to limit time. The terms do not require that the apparatus is required to have a determining action during implementation, and do not mean any other limitation.

It should be understood that the term "and/or" in this specification describes only an association relationship between associated objects and indicates that three relationships may exist. For example, A and/or B may represent the following three cases: Only A exists, both A and B exist, and only B exists. In addition, the character "/" in this specification usually indicates an "or" relationship between associated objects.

The solutions provided in embodiments of this application have been described above mainly from a perspective of interaction between nodes. It may be understood that, to implement the foregoing functions, each node, for example, a network digital twin function network element, a network simulation function network element, an artificial intelligence assistant, and a network data analytics function network element, includes a corresponding hardware structure and/or software module for performing each function. A person skilled in the art should be aware that units and algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, each core network element may be divided into functional modules based on the foregoing method examples. For example, the functional modules may be obtained through division in a one-to-one correspondence with the functions, or two or more functions may be integrated into one processing module. The integrated module may be implemented in a form of hardware, or may be implemented in a form of a software functional module. It should be noted that the module division in embodiments of this application is an example, and is merely logical function division. There may be another division manner in actual implementation. In the following description, it is assumed that the functional modules are obtained through division in a one-to-one correspondence with the functions.

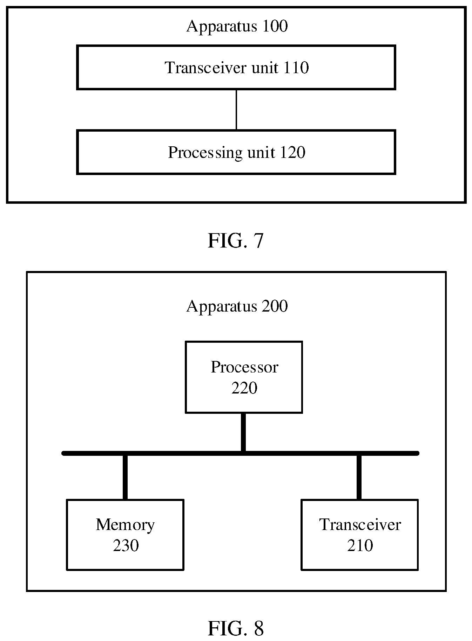

FIG. 7 is a block diagram of a communication apparatus 100 according to an embodiment of this application. As shown in the figure, the apparatus 100 may include a transceiver unit 110 and a processing unit 120.

In a possible design, the apparatus 100 may be the network digital twin function network element in the foregoing method embodiment, or may be a chip configured to implement a function of the network digital twin function network element in the foregoing method embodiment. It should be understood that the apparatus 100 may correspond to the first network element (or the network digital twin function network element) in the method 200, the method 300, the method 400, and the method 600 according to embodiments of this application. The apparatus 100 may perform steps corresponding to the first network element (or the network digital twin function network element) in the method 200, the method 300, the method 400, and the method 600 in embodiments of this application.

In a possible implementation, the transceiver unit is configured to send a first subscription message, the transceiver unit is further configured to receive a first notification message, and the processing unit is configured to generate status information of a twin network based on a target message.

In a possible implementation, the transceiver unit is further configured to receive a second subscription message, and the processing unit is configured to: determine, from the status information of the twin network, status information of a target twin object corresponding to a target event, and monitor the target twin object.

In a possible implementation, when determining that service experience of an application corresponding to the target twin object is poor, the processing unit controls the transceiver unit to send a second notification message.

In a possible implementation, the transceiver unit is configured to receive a first request message, and the transceiver unit is further configured to send a first response message.

In a possible implementation, the processing unit is configured to obtain updated target information; the processing unit is configured to update the status information of the twin network based on the updated target information; and when determining that the status information of the target twin object corresponding to the target event changes, the processing unit controls the transceiver unit to send first indication information.

In a possible design, the apparatus 100 may be the network simulation function network element in the foregoing method embodiment, or may be a chip configured to implement a function of the network simulation function network element in the foregoing method embodiment. It should be understood that the apparatus 100 may correspond to the second network element (or the network simulation function network element) in the method 200, the method 300, the method 400, and the method 600 according to embodiments of this application. The apparatus 100 may perform steps corresponding to the second network element (or the network simulation function network element) in the method 200, the method 300, the method 400, and the method 600 in embodiments of this application.

In a possible implementation, the transceiver unit is configured to receive a second request message; the processing unit is configured to obtain, based on the second request message, status information of a target twin object corresponding to a target event; the processing unit is configured to perform simulation based on a simulation model, and generate a simulation result; and the transceiver unit is configured to send a second response message.

In a possible implementation, that the processing unit is configured to obtain, based on the second request message, the status information of the target twin object corresponding to the target event includes: the processing unit is configured to control, based on the second request message, the transceiver unit to send a first request message, and the transceiver unit is further configured to receive a first response message.

In a possible design, the apparatus 100 may be the artificial intelligence assistant in the foregoing method embodiment, or may be a chip configured to implement a function of the artificial intelligence assistant in the foregoing method embodiment. It should be understood that the apparatus 100 may correspond to the third network element (or the artificial intelligence assistant) in the method 200, the method 300, the method 400, and the method 600 according to embodiments of this application. The apparatus 100 may perform steps corresponding to the third network element (or the artificial intelligence assistant) in the method 200, the method 300, the method 400, and the method 600 in embodiments of this application.

In a possible implementation, the transceiver unit is configured to obtain first information, and the processing unit is configured to determine a type of a task based on the first information.

In a possible implementation, the transceiver unit is configured to send a second subscription message, and the transceiver unit is configured to receive a second notification message.

In a possible implementation, the transceiver unit is configured to determine, based on the second notification message, a target assurance policy corresponding to a target event.

In a possible implementation, the transceiver unit is configured to send a second request message, the transceiver unit is further configured to receive a second response message, and the processing unit is configured to determine, based on a simulation result, a target assurance policy corresponding to the target event.

In a possible implementation, the transceiver unit is configured to receive first indication information, and the processing unit is configured to evaluate, based on the first indication information, an effect of service experience after the target assurance policy is executed in a physical network.

In a possible design, the apparatus 100 may be the network data analytics function network element in the foregoing method embodiment, or may be a chip configured to implement a function of the network data analytics function network element in the foregoing method embodiment. It should be understood that the apparatus 100 may correspond to the network data analytics function network element in the method 600 according to embodiments of this application, and the apparatus 100 may perform steps corresponding to the network data analytics function network element in the method 600 in embodiments of this application.

In a possible implementation, the transceiver unit is configured to receive a first subscription message from a first network element, the processing unit is configured to obtain target information based on the first subscription message, the processing unit is configured to generate status information of a physical object based on the first subscription message and the target information, and the transceiver unit is configured to send a first notification message, where the first notification message carries the status information of the physical object.

It should be further understood that the apparatus 100 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a combined logic circuit, and/or another appropriate component that supports the described function.

The apparatus 100 in the foregoing solutions has functions of implementing corresponding steps performed by the radio access network device in the foregoing methods, or the apparatus 100 in the foregoing solutions has functions of implementing corresponding steps performed by the network digital twin function network element, the network simulation function network element, the artificial intelligence assistant, and the network data analytics function network element in the foregoing methods. The functions may be implemented by hardware, or may be implemented by hardware by executing corresponding software. The hardware or software includes one or more modules corresponding to the foregoing functions. For example, the transceiver unit may be replaced with a transceiver (for example, a sending unit in the transceiver unit may be replaced with a transmitter machine, and a receiving unit in the transceiver unit may be replaced with a receiver machine), and another unit such as the processing unit may be replaced with a processor, to separately perform sending and receiving operations and related processing operations in method embodiments.

In addition, alternatively, the transceiver unit 110 may be a transceiver circuit (for example, may include a receiving circuit and a sending circuit), and the processing unit may be a processing circuit.

It should be noted that the apparatus in FIG. 7 may be a network element or a device in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit integrated on the chip. This is not limited herein.

FIG. 8 is a block diagram of a communication apparatus 200 according to an embodiment of this application. As shown in the figure, the apparatus 200 includes at least one processor 220. The processor 220 is coupled to a memory, and is configured to execute instructions stored in the memory, to send a signal and/or receive a signal. Optionally, the device 200 further includes a memory 230, configured to store instructions. Optionally, the device 200 further includes a transceiver 210, and the processor 220 controls the transceiver 210 to transmit a signal and/or receive a signal.

It should be understood that the processor 220 and the memory 230 may be integrated into one processing device. The processor 220 is configured to execute program code stored in the memory 230 to implement the foregoing functions. During specific implementation, the memory 230 may alternatively be integrated into the processor 220, or may be independent of the processor 220.

It should be further understood that the transceiver 210 may include a transceiver (or referred to as a receiver machine) and a transmitter (or referred to as a transmitter machine). The transceiver may further include an antenna. There may be one or more antennas. The transceiver 210 may be a communication interface or an interface circuit.

Specifically, the transceiver 210 in the apparatus 200 may correspond to the transceiver unit 110 in the apparatus 100, and the processor 220 in the apparatus 200 may correspond to the processing unit 120 in the apparatus 200.

In a solution, the apparatus 200 is configured to implement operations performed by the network digital twin function network element in the foregoing method embodiments.

For example, the processor 220 is configured to execute a computer program or the instructions stored in the memory 230, to implement the related operations of the network digital twin function network element in the foregoing method embodiments, for example, the method performed by the network digital twin function network element in any one of the embodiments shown in FIG. 2 to FIG. 7 and FIG. 6A to FIG. 6D.

For example, the processor 220 is configured to execute a computer program or the instructions stored in the memory 230, to implement the related operations of the network simulation function network element in the foregoing method embodiments, for example, the method performed by the network simulation function network element in any one of the embodiments shown in FIG. 2 to FIG. 7 and FIG. 6A to FIG. 6D.

For example, the processor 220 is configured to execute a computer program or the instructions stored in the memory 230, to implement the related operations of the artificial intelligence assistant in the foregoing method embodiments, for example, the method performed by the artificial intelligence assistant in any one of the embodiments shown in FIG. 2 to FIG. 7 and FIG. 6A to FIG. 6D.

For example, the processor 220 is configured to execute a computer program or the instructions stored in the memory 230, to implement the related operations of the network data analytics function network element in the foregoing method embodiments, for example, the method performed by the network data analytics function network element in the embodiment shown in FIG. 6A to FIG. 6D.

It should be understood that specific processes in which the transceiver and the processor perform the foregoing corresponding steps are described in detail in the foregoing method embodiments. For brevity, details are not described herein again.

In an implementation process, steps in the foregoing methods may be completed by using a hardware integrated logic circuit in the processor, or by using instructions in a form of software. The steps of the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be completed by using a hardware integrated logic circuit in the processor or by using instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor.

It may be understood that the memory in this embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), and an electrically erasable programmable read-only memory (electrically EPROM, EEPROM), or a flash memory. The volatile memory may be a random access memory (random access memory, RAM), used as an external cache. Through illustrative but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory in the system and the method described in this specification includes but is not limited to these and any other appropriate type of memory.

According to the methods provided in embodiments of this application, this application further provides a computer program product. The computer program product stores computer program code. When the computer program code is run on a computer, the computer is enabled to perform the method performed by the network digital twin function network element in any one of the embodiments of the method 200 to the method 400, and the method 600.

For example, when the computer program code is executed by a computer, the computer is enabled to implement the method performed by the network simulation function network element in the embodiments of the method 200 to the method 400, and the method 600.

For another example, when the computer program code is executed by a computer, the computer is enabled to implement the method performed by the artificial intelligence assistant in the embodiments of the method 200 to the method 400, and the method 600.

For another example, when the computer program code is executed by a computer, the computer is enabled to implement the method performed by the network data analytics function network element in the embodiment of the method 600.

According to the methods provided in embodiments of this application, this application further provides a computer-readable medium. The computer-readable medium stores program code. When the program code is run on a computer, the computer is enabled to perform the methods performed by the network digital twin function network element, the network simulation function network element, the artificial intelligence assistant, and the network data analytics function network element in the foregoing embodiments.

According to the methods provided in embodiments of this application, this application further provides a communication system, including a network digital twin function network element, a network simulation function network element, an artificial intelligence assistant, and a network data analytics function network element, configured to perform corresponding steps in any one of the embodiments of the methods 200 to 400, and the method 600.

For explanations and beneficial effects of related content in any one of the apparatuses provided above, refer to the corresponding method embodiment provided above. Details are not described herein again.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

In the foregoing apparatus embodiments, corresponding modules or units perform corresponding steps. For example, the transceiver unit (transceiver) performs a receiving or sending step in the method embodiments, and the processing unit (processor) may perform steps other than the sending and receiving steps. For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be but is not limited to a process that runs on a processor, a processor, an object, an executable file, an execution thread, a program, and/or a computer. As illustrated by using figures, both a computing device and an application that runs on the computing device may be components. One or more components may reside in a process and/or an execution thread, and a component may be located on one computer and/or distributed between two or more computers. In addition, these components may be executed from various computer-readable media that store various data structures. For example, the components may communicate by using a local process and/or a remote process and based on, for example, a signal having one or more data packets (for example, data from two components interacting with another component in a local system, a distributed system, and/or across a network such as the Internet interacting with other systems by using the signal).

A person of ordinary skill in the art may be aware that units and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, device, and unit, reference may be made to a corresponding process in the foregoing method embodiments, and details are not described herein again.

In the several embodiments provided in this application, it should be understood that the disclosed system, device, and method may be implemented in other manners. For example, the described device embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the devices or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a first network element, a first subscription message to a target network element, wherein the first subscription message is used to request to obtain target information, and the target information represents a status of a physical network;
receiving, by the first network element, a first notification message from the target network element, wherein the first notification message carries the target information, the target information comprises status information of a physical object in the physical network, and the physical object comprises at least one of the following: a network element, a network topology, a user, and an application; and
generating, by the first network element, status information of a twin network based on the target information, wherein the status information of the twin network comprises status information of a twin object, the twin object is in a one-to-one mapping with the physical object, and the status information of the twin network is used to monitor the status and service experience of the physical network.

2. The method according to claim 1, wherein
status information of the network element comprises at least one of the following: a type of the network element, resource specifications of the network element, a quantity of the users carried on the network element, distribution of the users carried on the network element, a congestion status of the users carried on the network element, and distribution of network traffic carried on the network element;
status information of the network topology comprises at least one of the following: a path between network elements, an interface between network elements, a specification of an interface between network elements, traffic carried on an interface between network elements, distribution of traffic carried on an interface between network elements, and status information of network elements;
status information of the user comprises at least one of the following: an attribute of the user, subscription information of the user, and a quality of service QoS parameter corresponding to the user; and
status information of the application comprises at least one of the following: a type of the application, a start time of a service corresponding to the application, duration of the service corresponding to the application, a throughput of traffic used by the service corresponding to the application, a rate of traffic used by the service corresponding to the application, service experience of the application, and a quality of service QoS parameter for carrying the application.

3. The method according to claim 1 or 2, wherein the method further comprises:
receiving, by the first network element, a second subscription message from a second network element, wherein the second subscription message is used to subscribe to monitoring of a target event from the first network element, and the second subscription message carries an identifier of the target event and an identifier of a target twin object corresponding to the target event; and
determining, by the first network element, from the status information of the twin network and based on the second subscription message, status information of the target twin object corresponding to the target event, and monitoring the target twin object.

4. The method according to claim 3, wherein the identifier of the target twin object comprises at least one of the following: an identifier of a target user, an identifier of the target service, and an identifier of the target cell.

5. The method according to claim 3 or 4, wherein the method further comprises:
sending, by the first network element, a second notification message to the second network element when the first network element determines that service experience of an application corresponding to the target twin object is poor, wherein the second notification message indicates that service experience of an application corresponding to the target event is relatively poor.

6. The method according to claim 5, wherein the second notification message carries at least one of the following: the identifier of the target user, the identifier of the target service, the identifier of the target cell, experience information of the target user accessing the target service, and an indicator of the target user accessing the target service.

7. The method according to any one of claims 1 to 6, wherein the method further comprises:
receiving, by the first network element, a first request message from a third network element, wherein the first request message is used to request to obtain the status information of the target twin object corresponding to the target event; and
sending, by the first network element, a first response message to the third network element, wherein the first response message carries the status information of the target twin object.

8. The method according to claim 7, wherein the first request message carries the identifier of the target cell; and
the status information of the target twin object comprises at least one of the following: utilization of physical resource blocks PRBs in the target cell, a quantity of target users comprised in the target cell, a quantity of packets or bytes transmitted in the target cell, a guaranteed bandwidth of a dedicated bearer allocated to the target cell, and a guaranteed bandwidth of a quality of service flow identifier QFI of the target cell.

9. The method according to any one of claims 1 to 8, wherein the method further comprises:
obtaining, by the first network element, the updated target information of the target network element, wherein the updated target information is generated after a target assurance policy is executed in the physical network;
updating, by the first network element, the status information of the twin network based on the updated target information; and
sending, by the first network element, first indication information to the second network element when the first network element determines that the status information of the target twin object corresponding to the target event changes, wherein the first indication information indicates that the status information of the target twin object changes.

10. The method according to any one of claims 3 to 9, wherein the target event comprises at least one of the following: service experience of the target service of the target user, a congestion status of the target cell in which the target user is located, the congestion status of the target cell, and service experience of a service in the target cell.

11. A communication method, comprising:
receiving, by a third network element, a second request message from a second network element, wherein the second request message carries an identifier of a target event and a target assurance policy, and the second request message is used to request to simulate an effect generated after the target assurance policy is executed in a physical network;
obtaining, by the third network element, from a first network element and based on the second request message, status information of a target twin object corresponding to the target event, wherein the twin object is in a one-to-one mapping with a physical object, the physical object comprises at least one of the following: a network element, a network topology, a user, and a service, and the status information of the twin object is used to monitor a status and service experience of the physical network;
performing, by the third network element, simulation based on the status information of the target twin object, the target assurance policy, and a simulation model, and generating a simulation result; and
sending, by the third network element, a second response message to the second network element, wherein the second response message carries the simulation result.

12. The method according to claim 11, wherein
status information of the network element comprises at least one of the following: a type of the network element, resource specifications of the network element, a quantity of the users carried on the network element, distribution of the users carried on the network element, a congestion status of the users carried on the network element, and distribution of network traffic carried on the network element;
status information of the network topology comprises at least one of the following: a path between network elements, an interface between network elements, a specification of an interface between network elements, traffic carried on an interface between network elements, distribution of traffic carried on an interface between network elements, and status information of network elements;
status information of the user comprises at least one of the following: an attribute of the user, subscription information of the user, and a quality of service QoS parameter corresponding to the user; and
status information of the application comprises at least one of the following: a type of the application, a start time of a service corresponding to the application, duration of the service corresponding to the application, a throughput of traffic used by the service corresponding to the application, a rate of traffic used by the service corresponding to the application, service experience of the application, and a quality of service QoS parameter for carrying the application.

13. The method according to claim 11 or 12, wherein obtaining, by the third network element, from the first network element and based on the second request message, the status information of the target twin object corresponding to the target event comprises:
sending, by the third network element, a first request message to the first network element based on the second request message, wherein the first request message is used to request to obtain the status information of the target twin object; and
receiving, by the third network element, a first response message from the first network element, wherein the first response message carries the status information of the target twin object.

14. The method according to claim 13, wherein the first request message carries an identifier of a target cell; and
the status information of the target twin object comprises at least one of the following: utilization of physical resource blocks PRBs in the target cell, a quantity of target users comprised in the target cell, a quantity of packets and a quantity of bytes transmitted in the target cell, a guaranteed bandwidth of a dedicated bearer allocated to the target cell, and a guaranteed bandwidth of a quality of service flow identifier QFI of the target cell.

15. The method according to any one of claims 11 to 14, wherein information of the target assurance policy comprises at least one of the following:
updating or adding a dedicated bearer with a guaranteed bit rate GBR, updating or adding a quality of service flow identifier QFI, deleting or updating a dedicated bearer established in the target cell, deleting or updating a quality of service flow identifier QFI established in the target cell, limiting bandwidths of some non-real-time services in the target cell, and limiting bandwidths of services based on different user tiers in the target cell.

16. The method according to any one of claims 11 to 15, wherein the simulation result comprises service experience information of a target user after the target assurance policy is executed, and status information of the target cell after the target assurance policy is executed.

17. The method according to any one of claims 11 to 16, wherein the target event comprises at least one of the following: service experience of the target service of the target user, a congestion status of the target cell in which the target user is located, the congestion status of the target cell, and service experience of a service in the target cell.

18. A communication method, comprising:
obtaining, by a second network element, first information, wherein the first information indicates a type of a task delivered by a user, and the type of the task comprises at least one of the following: a task of monitoring a target event, a task of determining a target assurance policy, a task of requesting simulation, and a task of evaluating an effect of service experience after the target assurance policy is executed in a physical network; and
determining, by the second network element, the type of the task based on the first information.

19. The method according to claim 18, wherein the method further comprises:
sending, by the second network element, a second subscription message to the first network element, wherein the second subscription message is used to subscribe to monitoring of the target event from the first network element, the second subscription message carries an identifier of the target event and an identifier of a target twin object corresponding to the target event, the twin object is in a one-to-one mapping with a physical object, the physical object comprises at least one of the following: a network element, a network topology, a user, and a service, and status information of the twin object is used to monitor a status and service experience of the physical network; and
receiving, by the second network element, a second notification message from the first network element, wherein the second notification message indicates that service experience of an application corresponding to the target event is relatively poor.

20. The method according to claim 19, wherein
status information of the network element comprises at least one of the following: a type of the network element, resource specifications of the network element, a quantity of the users carried on the network element, distribution of the users carried on the network element, a congestion status of the users carried on the network element, and distribution of network traffic carried on the network element;
status information of the network topology comprises at least one of the following: a path between network elements, an interface between network elements, a specification of an interface between network elements, traffic carried on an interface between network elements, distribution of traffic carried on an interface between network elements, and status information of network elements;
status information of the user comprises at least one of the following: an attribute of the user, subscription information of the user, and a quality of service QoS parameter corresponding to the user; and
status information of the application comprises at least one of the following: a type of the application, a start time of a service corresponding to the application, duration of the service corresponding to the application, a throughput of traffic used by the service corresponding to the application, a rate of traffic used by the service corresponding to the application, service experience of the application, and a quality of service QoS parameter for carrying the application.

21. The method according to claim 19 or 20, wherein the identifier of the target twin object comprises at least one of the following: an identifier of a target user, an identifier of the target service, and an identifier of the target cell.

22. The method according to any one of claims 19 to 21, wherein the second notification message carries at least one of the following: the identifier of the target user, the identifier of the target service, the identifier of the target cell, experience information of the target user accessing the target service, and an indicator of the target user accessing the target service.

23. The method according to any one of claims 18 to 22, wherein the target event comprises at least one of the following: service experience of the target service of the target user, a congestion status of the target cell in which the target user is located, the congestion status of the target cell, and service experience of a service in the target cell.

24. The method according to any one of claims 18 to 23, wherein the method further comprises:
sending, by the second network element, a second subscription message to the first network element, wherein the second subscription message is used to request to monitor the target event;
receiving, by the second network element, a second notification message from the first network element, wherein the second notification message indicates that service experience of the application corresponding to the target event is relatively poor; and
determining, by the second network element based on the second notification message, a target assurance policy corresponding to the target event.

25. The method according to claim 24, wherein the target assurance policy comprises at least one of the following: updating or adding a dedicated bearer with a guaranteed bit rate GBR, updating or adding a quality of service flow identifier QFI, deleting or updating a dedicated bearer established in the target cell, deleting or updating a quality of service flow identifier QFI established in the target cell, limiting bandwidths of some non-real-time services in the target cell, and limiting bandwidths of services based on different user tiers in the target cell.

26. The method according to any one of claims 18 to 25, wherein the method further comprises:
sending, by the second network element, a second request message to a third network element, wherein the second request message carries the identifier of the target event and the target assurance policy, and the second request message is used to request to simulate an effect generated after the target assurance policy is executed in the physical network;
receiving, by the second network element, a second response message from the third network element, wherein the second response message carries a simulation result; and
determining, by the second network element based on the simulation result, a target assurance policy corresponding to the target event.

27. The method according to claim 26, wherein the simulation result comprises service experience information of the target user after the target assurance policy is executed, and status information of the target cell after the target assurance policy is executed.

28. The method according to any one of claims 18 to 27, wherein the method further comprises:
receiving, by the second network element, first indication information from the first network element, wherein the first indication information indicates that status information of the target twin object corresponding to the target event changes; and
evaluating, by the second network element based on the first indication information, the effect of service experience after the target assurance policy is executed in the physical network.

29. A communication apparatus, comprising a module configured to perform the method according to any one of claims 1 to 10, comprising a module configured to perform the method according to any one of claims 11 to 17, or comprising a module configured to perform the method according to any one of claims 18 to 28.

30. A communication apparatus, wherein the communication apparatus comprises at least one processor and a communication interface, wherein the communication interface is configured to exchange information between the communication apparatus and another communication apparatus, and when program instructions are executed in the at least one processor, the communication apparatus is enabled to perform the method according to any one of claims 1 to 10, or the communication apparatus is enabled to perform the method according to any one of claims 11 to 17, or the communication apparatus is enabled to perform the method according to any one of claims 18 to 28.
